# EUROPEAN PATENT APPLICATION

(11) **EP 4 756 643 A1**
(43) Date of publication of application: **10.06.2026**
(21) Application number: 25201352.9
(22) Date of filing: 10.09.2025
(51) Int. Cl.: G06F 16/334, G06F 18/2413

(54) **APPROXIMATE NEAREST NEIGHBOR SEARCH METHOD AND APPROXIMATE NEAREST NEIGHBOR SEARCH SYSTEM**

(30) Priority: 04.12.2024 JP 2024211591
(71) Applicant: Kioxia Corporation, Tokyo (JP)
(72) Inventor: KANNO, Shinichi, Minato-ku, Tokyo (JP); WATABE, Toru, Minato-ku, Tokyo (JP); KURITA, Takahiro, Minato-ku, Tokyo (JP)
(74) Representative: Hoffmann Eitle

(57) **Abstract**

According to one embodiment, an approximate nearest neighbor search method for a vector database (21) in which N D-dimensional vectors are stored, includes managing N pieces of first direction information acquired in advance. The N pieces of first direction information each represent a direction from a first reference vector of D dimensions to each of the N D-dimensional vectors. The method includes receiving a query vector of D dimensions, calculating second direction information representing a direction from the first reference vector to the query vector, and searching for an approximate nearest neighbor vector of the query vector from the N D-dimensional vectors by using the N pieces of first direction information and the second direction information.

## Description

### CROSS-REFERENCE TO RELATED APPLICATIONS

This application is based upon and claims the benefit of priority from Japanese Patent Application No. 2024-211591, filed December 4, 2024.

### FIELD

Embodiments described herein relate generally to an approximate nearest neighbor search (ANNS).

### BACKGROUND

In recent years, a nearest neighbor search in which a nearest neighbor vector is searched for from a vector database through a full search has been performed. Instead of the nearest neighbor search, algorithms for an approximate nearest neighbor search in which a vector (approximate nearest neighbor vector) sufficiently close to a query (query vector) is quickly searched for have been actively developed. However, in a case where, for example, a vector database stores a billion-scale data set including one billion or more vectors and the approximate nearest neighbor search on the vector database is performed based on a query, much time and power cost are required. Specifically, for example, storing a large amount of multidimensional vectors in a main storage device (main memory) or a secondary storage device, moving data regarding a multidimensional vector between the main storage device and the secondary storage device or between information processing devices each including a storage device, and calculating the similarity between a query vector and a multidimensional vector in the vector database require much time and power cost.

### BRIEF DESCRIPTION OF THE DRAWINGS

FIG. 1 is a block diagram illustrating an example of a configuration of an approximate nearest neighbor search system according to an embodiment.
FIG. 2 is a diagram illustrating an example of a hybrid index structure of the approximate nearest neighbor search system according to the embodiment.
FIG. 3 is a diagram illustrating an example of a search process that uses the hybrid index structure and is executed in the approximate nearest neighbor search system according to the embodiment.
FIG. 4A is a diagram for explaining a part of an example of a principle of an approximate nearest neighbor vector search in which a distance between vectors and a direction between the vectors are used.
FIG. 4B is a diagram for explaining another part of the example of the principle of the approximate nearest neighbor vector search in which a distance between vectors and a direction between the vectors are used.
FIG. 4C is a diagram for explaining still another part of the example of the principle of the approximate nearest neighbor vector search in which a distance between vectors and a direction between the vectors are used.
FIG. 4D is a diagram for explaining still another part of the example of the principle of the approximate nearest neighbor vector search in which a distance between vectors and a direction between the vectors are used.
FIG. 5A is a diagram for explaining a part of an example of a principle of an approximate nearest neighbor vector search in which a distance between vectors is used.
FIG. 5B is a diagram for explaining another part of the example of the principle of the approximate nearest neighbor vector search in which a distance between vectors is used.
FIG. 5C is a diagram for explaining still another part of the example of the principle of the approximate nearest neighbor vector search in which a distance between vectors is used.
FIG. 6 is a diagram for explaining another example of the principle of the approximate nearest neighbor vector search in which a distance between vectors is used.
FIG. 7 is a diagram illustrating an example of an approximate nearest neighbor cluster search in which a distance between vectors and a direction between the vectors are used, in the approximate nearest neighbor search system according to the embodiment.
FIG. 8 is a diagram illustrating an example of a relationship between (a) a Hamming distance that represents a directional deviation between a vector and another vector and (b) a probability of occurrence of the other vector, in the approximate nearest neighbor search system according to the embodiment.
FIG. 9 is a diagram illustrating a first example of an approximate nearest neighbor vector search in which a distance between vectors and a direction between the vectors are used, in the approximate nearest neighbor search system according to the embodiment.
FIG. 10 is a diagram illustrating a second example of the approximate nearest neighbor vector search in which a distance between vectors and a direction between the vectors are used, in the approximate nearest neighbor search system according to the embodiment.
FIG. 11 is a diagram illustrating an example of a search region of an approximate nearest neighbor vector that is narrowed by using a reference point and a plurality of auxiliary reference points, in the approximate nearest neighbor search system according to the embodiment.
FIG. 12 is a diagram illustrating an example of a configuration of higher-layer index information that is used in the approximate nearest neighbor search system according to the embodiment.
FIG. 13 is a diagram illustrating an example of a configuration of lowest-layer index information that is used in the approximate nearest neighbor search system according to the embodiment.
FIG. 14 is a flowchart illustrating an example of a procedure of a construction process executed in the approximate nearest neighbor search system according to the embodiment.
FIG. 15 is a flowchart illustrating an example of a procedure of a first relative position information generation process executed in the approximate nearest neighbor search system according to the embodiment.
FIG. 16 is a flowchart illustrating an example of a procedure of a second relative position information generation process executed in the approximate nearest neighbor search system according to the embodiment.
FIG. 17 is a flowchart illustrating an example of a procedure of an approximate nearest neighbor cluster search process executed in the approximate nearest neighbor search system according to the embodiment.
FIG. 18 is a flowchart illustrating an example of a procedure of a nearest neighbor lower-layer cluster search process executed in the approximate nearest neighbor search system according to the embodiment.
FIG. 19 is a flowchart illustrating an example of a procedure of an approximate nearest neighbor vector search process executed in the approximate nearest neighbor search system according to the embodiment.

### DETAILED DESCRIPTION

In general, according to one embodiment, an approximate nearest neighbor search method for a vector database in which N D-dimensional vectors are stored, includes managing N pieces of first direction information acquired in advance. The N first pieces of direction information each represent a direction from a first reference vector of D dimensions to each of the N D-dimensional vectors. The approximate nearest neighbor search method includes receiving a query vector of D dimensions. The approximate nearest neighbor search method includes calculating second direction information representing a direction from the first reference vector to the query vector. The approximate nearest neighbor search method includes searching for an approximate nearest neighbor vector of the query vector from the N D-dimensional vectors by using the N pieces of first direction information and the second direction information. N is an integer of two or more. D is an integer of two or more.

Various embodiments will be described hereinafter with reference to the accompanying drawings.

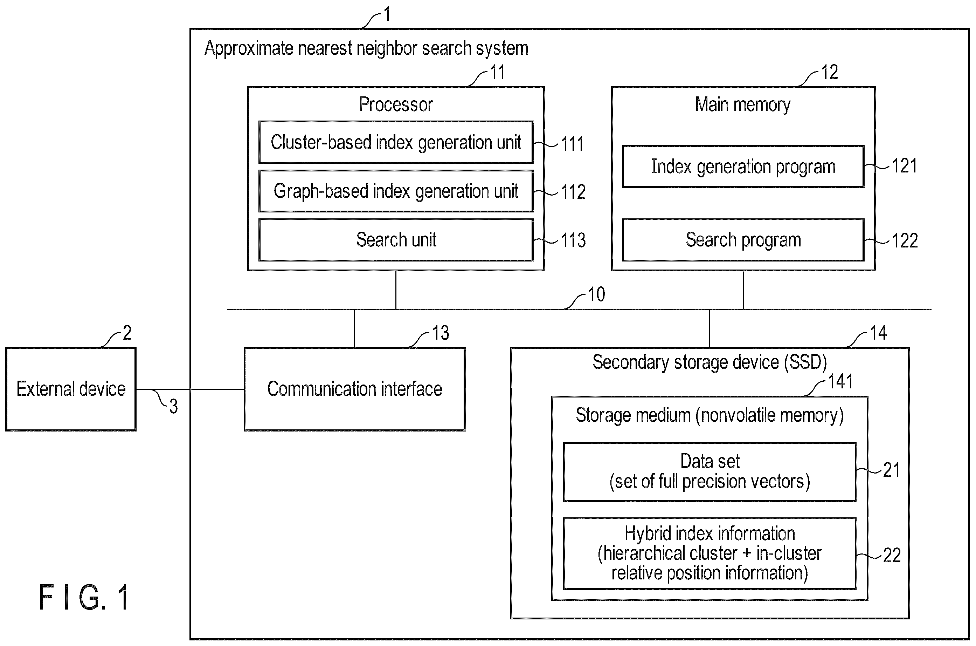

FIG. 1 is a block diagram illustrating an example of a configuration of an approximate nearest neighbor search system 1 according to an embodiment. The approximate nearest neighbor search system 1 is a computer system configured to perform an approximate nearest neighbor search on a vector database.

The vector database is a database that stores and manages a data set 21. The data set 21 includes a plurality of vectors. Each of the plurality of vectors is an uncompressed vector, that is, a full-precision vector.

Each of the plurality of vectors in the data set 21 includes a plurality of feature values that correspond to a plurality of dimensions, respectively. A case is assumed where the number of dimensions of each vector is D. In this case, each vector (D-dimensional vector) corresponds to a point (data point) in a D-dimensional space. Each of D elements included in the D-dimensional vector indicates a feature value (real number) for each of D attributes. Each vector is a high-dimensional vector whose number D of dimensions is several hundreds or thousands. The number D of dimensions is an integer of two or more, and more specifically, for example, 1024 or 2048. Hereinafter, the D-dimensional space is also referred to as a data space or a vector space.

The approximate nearest neighbor search system 1 receives a query vector based on a query from an external device 2. The query vector indicates target data (target vector) to be retrieved from the vector database. The query vector has the same number D of dimensions as the number D of dimensions of each vector in the vector database. That is, similarly to each vector in the vector database, the query vector also includes D feature values that correspond to D dimensions, respectively. Hereinafter, the query vector is also simply referred to as a query.

The approximate nearest neighbor search system 1 performs the approximate nearest neighbor search on the vector database on the basis of the received query. The approximate nearest neighbor search is a search method of searching for a vector (approximate nearest neighbor vector) that is sufficiently close to the query with respect to a certain distance metric at a high speed.

In the present embodiment, for example, the Euclidean distance is used as a distance metric for indicating a distance between vectors. In this case, basically, for each of several vectors to be searched among all the vectors in the vector database, the Euclidean distance from the query (query vector) is calculated, and then a vector having the shortest Euclidean distance from the query among the vectors to be searched is found as the approximate nearest neighbor vector of the query.

Note that the distance metric is not limited to the Euclidean distance and may be any other distance capable of indicating a distance between vectors.

Next, a configuration of the approximate nearest neighbor search system 1 will be explained. The approximate nearest neighbor search system 1 includes a processor 11, a main memory 12, a communication interface 13, and a secondary storage device 14. The processor 11, the main memory 12, the communication interface 13, and the secondary storage device 14 are interconnected via a bus 10.

The processor 11 is, for example, a central processing unit (CPU). The processor 11 is accessible to the main memory 12 and the secondary storage device 14. The processor 11 executes computer programs (here, an index generation program 121 and a search program 122) stored in the main memory 12, thereby executing various processes that include generation of index information 22 (here, hybrid index information 22), storage of the index information 22 in the secondary storage device 14, and searching of the data set 21. The hybrid index information 22 is a data structure used for searching for a target vector (i.e., an approximate nearest neighbor vector of a query) from the data set 21.

The main memory 12 is a memory device with low access latency such as a dynamic random access memory (DRAM). A storage area of the main memory 12 is used as an area for storing a program to be executed by the processor 11 and a work area of the processor 11.

The communication interface 13 is a communication device. The communication interface 13 performs communication with the external device 2 via a communication path 3 such as a network or a bus, for example.

The secondary storage device 14 is a storage device that has a capacity larger than that of the main memory 12 and has an access speed slower than that of the main memory 12.

The approximate nearest neighbor search system 1 targets implementation of a trillion-scale vector database that can store and manage the data set 21 including one trillion or more vectors. In a case where the trillion-scale vector database is constructed, since the size of the data set 21 and the size of the index information 22 increase, it is difficult to store the index information 22 in the main memory 12. Accordingly, in the approximate nearest neighbor search system 1, the data set 21 and the index information 22 are stored in a storage medium 141 of the secondary storage device 14. Note that the data set 21 and the index information 22 may be stored in a plurality of secondary storage devices 14, respectively. Alternatively, a large number of data portions that are obtained by dividing each of the data set 21 and the index information 22 may be distributed and stored in a large number of secondary storage devices 14.

The secondary storage device 14 may be implemented as a hard disk drive (HDD) or a solid state drive (SSD). Hereinafter, it is assumed that the secondary storage device 14 is implemented as an SSD.

The SSD is a memory system that includes a nonvolatile memory and a controller configured to control the nonvolatile memory.

The nonvolatile memory includes a plurality of blocks (also referred to as memory blocks, physical blocks, or flash blocks). The blocks each function as a unit of a data erase operation. Each of the blocks includes a plurality of pages. The pages each function as a unit of a data write operation and a data read operation. The nonvolatile memory is, for example, a NAND flash memory. The NAND flash memory is, for example, a flash memory of a three-dimensional structure.

The controller is a memory controller including a circuit (or circuitry), and is implemented as, for example, a large-scale integrated circuit (LSI) such as a System-on-a-Chip (SoC).

Next, a functional configuration of the processor 11 will be described.

The processor 11 functions as a cluster-based index generation unit 111, a graph-based index generation unit 112, and a search unit 113 by executing the index generation program 121 and the search program 122. Each of the cluster-based index generation unit 111, the graph-based index generation unit 112, and the search unit 113 may be implemented by dedicated hardware (circuit) in the approximate nearest neighbor search system 1.

The cluster-based index generation unit 111 generates and manages a plurality of clusters. Each of the plurality of clusters has a reference position.

The reference position of each cluster is represented by a vector that has the same number of dimensions as the number of dimensions of each vector in the data set 21. In other words, similarly to each vector in the data set 21, the reference position of the cluster corresponds to one point in the data space (D-dimensional vector space) and is represented by a D-dimensional vector. Therefore, hereinafter, the reference position of each cluster is also referred to as a reference vector of each cluster.

To each of the plurality of clusters, a group of vectors close to its reference position belongs. The number of vectors belonging to one cluster is, for example, N. N is, for example, an integer of two or more. In constructing the trillion-scale vector database, N may be 256, for example. A relationship between each cluster and a group of vectors belonging to each cluster is determined as follows.

For example, a case is assumed where a cluster X having a reference position x, a cluster Y having a reference position y, and a cluster Z having a reference position z are managed.

In this case, each of vectors close to the reference position x is managed so as to belong to the cluster X, each of vectors close to the reference position y is managed so as to belong to the cluster Y, and each of vectors close to the reference position z is managed so as to belong to the cluster Z.

A distance from each of vectors belonging to a cluster to a reference position of the cluster is shorter than a distance from each of the vectors to a reference position of each of the other clusters. That is, each vector in the data set 21 belongs to a cluster in which a distance between its reference position and the vector is the shortest.

As the reference position of each cluster, for example, any one of vectors belonging to the cluster may be used. In this case, the reference position of each cluster corresponds to a representative point of a plurality of data points respectively corresponding to a plurality of vectors that belong to the cluster, and is also referred to as a cluster centroid.

The cluster-based index generation unit 111 generates cluster-based index information for specifying the plurality of clusters each having the reference position (reference vector), and manages the generated cluster-based index information.

The cluster-based index information includes a belonging vector list for each of the plurality of clusters. The belonging vector list corresponding to a cluster indicates an identifier of each vector (belonging vector) that belongs to the cluster.

In addition, the cluster-based index information includes information indicative of a relative positional relationship between the reference vector and each belonging vector that are included in each of the plurality of clusters. The information indicative of a relative positional relationship between vectors is also referred as relative position information. The relative position information includes, for example, distance information and direction information. The distance information is information indicating the distance between the reference vector and each belonging vector. The direction information is information representing a direction from the reference vector to each belonging vector. The direction is also referred to as an azimuth or an orientation.

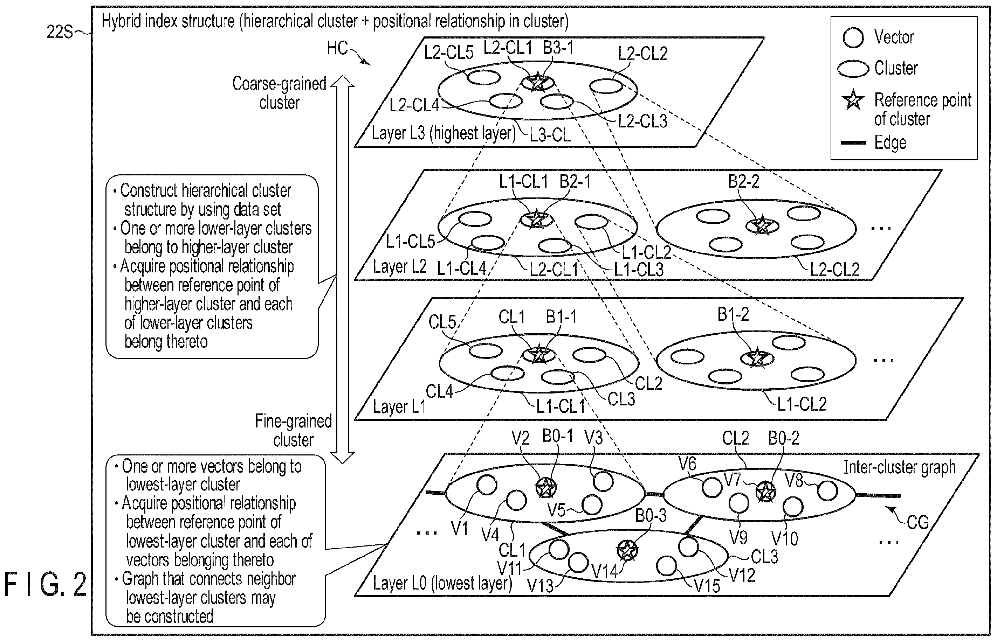

In the present embodiment, in order to reduce a calculation amount and a time required to search for an approximate nearest neighbor vector of a query from one trillion or more vectors, the plurality of clusters may be managed as a hierarchical cluster. In this case, the cluster-based index information includes information for managing the plurality of clusters as the hierarchical cluster having a hierarchized cluster structure. Details of the hierarchical cluster will be described below with reference to FIG. 2 and subsequent figures.

The graph-based index generation unit 112 generates graph-based index information and manages the generated graph-based index information. The graph-based index information includes information for specifying an inter-cluster graph.

The inter-cluster graph is not a graph connecting vectors close to each other but a graph connecting clusters close to each other. That is, the inter-cluster graph includes a plurality of nodes and a plurality of edges. The plurality of nodes correspond to the plurality of clusters, respectively. Each of the plurality of edges connects two nodes respectively corresponding to clusters that have reference positions close to each other.

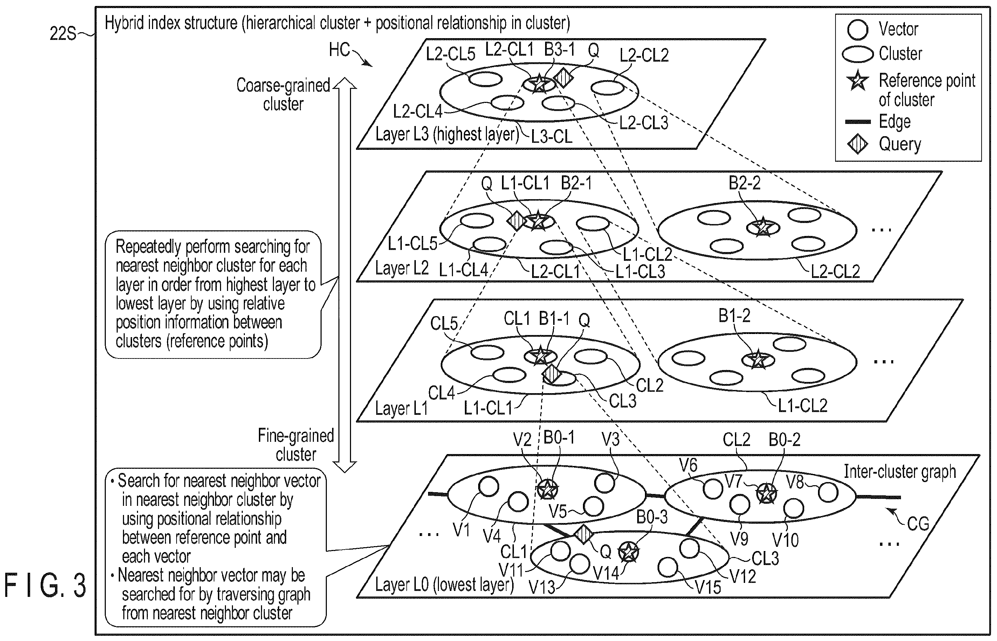

Details of a structure of the inter-cluster graph will be described with reference to FIG. 3.

The search unit 113 receives a query vector based on a query from the external device 2 and then performs the approximate nearest neighbor search on the vector database. In the approximate nearest neighbor search, the search unit 113 searches for an approximate nearest neighbor vector of the query from the data set 21 by using the hybrid index information 22 that includes the cluster-based index information and the graph-based index information.

Next, a hybrid index structure that includes a hierarchical cluster HC and inter-cluster graphs CG will be described. FIG. 2 is a diagram illustrating an example of the hybrid index structure.

The hierarchical cluster HC includes a plurality of layers. These plurality of layers include a lowest layer and a plurality of higher layers. In FIG. 2, a case where the lowest layer is a layer L0 and the plurality of higher layers include a layer L1, a layer L2, and a layer L3 is illustrated as an example.

The lowest layer L0 includes a plurality of lowest-layer clusters. A group of vectors close to the reference position belongs to each of the plurality of lowest-layer clusters. The plurality of clusters described above correspond to the plurality of lowest-layer clusters included in the lowest layer L0, respectively.

In FIG. 2, only three lowest-layer clusters CL1, CL2, and CL3 in the lowest layer L0 are illustrated by way of example. However, in actual implementation, the lowest layer L0 may include as many lowest-layer clusters as a number that is obtained by dividing the number of vectors in the data set 21 by N **(i.e.,** the number of vectors per cluster). In FIG. 2, a case where N is five is illustrated as an example, but N may be a finite natural number other than five.

Vectors V1 to V5 belong to the lowest-layer cluster CL1. Each of the vectors V1 to V5 is a vector close to a reference position B0-1 of the lowest-layer cluster CL1. The reference position (reference vector) B0-1 of the lowest-layer cluster CL1 may be set to coincide with one of the vectors V1 to V5 (here, the vector V2).

Vectors V6 to V10 belong to the lowest-layer cluster CL2. Each of the vectors V6 to V10 is a vector close to a reference position B0-2 of the lowest-layer cluster CL2. The reference position (reference vector) B0-2 of the lowest-layer cluster CL2 may be set to coincide with one of the vectors V6 to V10 (here, the vector V7).

Vectors V11 to V15 belong to the lowest-layer cluster CL3. Each of the vectors V11 to V15 is a vector close to a reference position B0-3 of the lowest-layer cluster CL3. The reference position (reference vector) B0-3 of the lowest-layer cluster CL3 may be set to coincide with one of the vectors V11 to V15 (here, the vector V14).

Two lowest-layer clusters having the reference positions close to each other among the plurality of lowest-layer clusters are connected to each other by an edge of the inter-cluster graph CG. Note that, in FIGS. 2 and 3, the edge is represented by a bold line.

N lowest-layer clusters (here, five lowest-layer clusters) among the plurality of lowest-layer clusters are grouped into a set and belong to a higher-layer cluster among a plurality of higher-layer clusters included in the layer L1 that is one-layer above the lowest layer.

In FIG. 2, only two higher-layer clusters L1-CL1 and L1-CL2 among the plurality of higher-layer clusters included in the layer L1 are illustrated as an example. The higher-layer clusters L1-CL1 and L1-CL2 have reference positions B1-1 and B1-2, respectively.

For example, the lowest-layer clusters CL1 to CL5 belong to the higher-layer cluster L1-CL1. The lowest-layer clusters CL1 to CL5 are referred to as lower-layer clusters of the higher-layer cluster L1-CL1. Each of the lowest-layer clusters CL1 to CL5 is a lowest-layer cluster having the reference position close to the reference position B1-1 of the higher-layer cluster L1-CL1. The reference position (reference vector) B1-1 of the higher-layer cluster L1-CL1 may be set to coincide with the reference position of one of the lowest-layer clusters CL1 to CL5 (here, the lowest-layer cluster CL1).

N higher-layer clusters (here, five higher-layer clusters) among the plurality of higher-layer clusters included in the layer L1 are grouped into a set and belong to a higher-layer cluster among a plurality of higher-layer clusters included in the layer L2.

In FIG. 2, only two higher-layer clusters L2-CL1 and L2-CL2 among the plurality of higher-layer clusters included in the layer L2 are illustrated as an example. The higher-layer clusters L2-CL1 and L2-CL2 have reference positions B2-1 and B2-2, respectively.

For example, the higher-layer clusters L1-CL1 to L1-CL5 of the layer L1 belong to the higher-layer cluster L2-CL1 as lower-layer clusters of the higher-layer cluster L2-CL1. Each of the higher-layer clusters L1-CL1 to L1-CL5 of the layer L1 has the reference position close to the reference position B2-1 of the higher-layer cluster L2-CL1 of the layer L2. The reference position (reference vector) B2-1 of the higher-layer cluster L2-CL1 of the layer L2 may be set to coincide with the reference position of one of the higher-layer clusters L1-CL1 to L1-CL5 (here, the higher-layer cluster L1-CL1).

N higher-layer clusters (here, five higher-layer clusters) included in the layer L2 that is one-layer above the layer L1 are grouped into a set and belong to a higher-layer cluster (highest-layer cluster) L3-CL included in the layer L3 (highest layer).

The higher-layer clusters L2-CL1 to L2-CL5 of the layer L2 belong to the highest-layer cluster L3-CL as lower-layer clusters of the highest-layer cluster L3-CL. Each of the higher-layer clusters L2-CL1 to L2-CL5 of the layer L2 has the reference position close to a reference position B3-1 of the highest-layer cluster L3-CL. The reference position (reference vector) B3-1 of the highest-layer cluster L3-CL may be set to coincide with the reference position of one of the higher-layer clusters L2-CL1 to L2-CL5 (here, the higher-layer cluster L2-CL1).

In this manner, the plurality of clusters to which the groups of vectors belong, respectively, are managed by using the hierarchized cluster structure (that is, the hierarchical cluster HC) that includes the lowest layer and the plurality of higher layers.

Note that the number of lower-layer clusters belonging to each higher-layer cluster may be changed by addition or deletion of a lower-layer cluster. When the number of lower-layer clusters that belong to a higher-layer cluster has become zero, the higher-layer cluster may be deleted. Therefore, one or more lower-layer clusters belong to each higher-layer cluster. In addition, the number of vectors that belong to each lowest-layer cluster is changed by adding a vector to the data set 21 or deleting a vector from the data set 21. When the number of vectors that belong to a lowest-layer cluster has become zero, the lowest-layer cluster may be deleted. Therefore, one or more vectors belong to each lowest-layer cluster.

Next, a case is assumed where the trillion-scale vector database is constructed. In this case, N may be set to several hundreds, for example, 256.

256 vectors V belong to lowest-layer cluster CL of the lowest layer L0.

256 lowest-layer clusters CL each including the 256 vectors V belong to a higher-layer cluster L1-CL in the layer L1 as lower-layer clusters thereof. Therefore, the number of vectors V that can be managed by each higher-layer cluster L1-CL in the layer L1 is 256².

256 higher-layer clusters L1-CL each including the 256 lower-layer clusters (256 lowest-layer clusters CL) belong to a higher-layer cluster L2-CL in the layer L2 as lower-layer clusters thereof. Therefore, the number of vectors that can be managed by each higher-layer cluster L2-CL in the layer L2 is 256³.

256 higher-layer clusters L2-CL each including the 256 lower-layer clusters (256 higher-layer clusters L1-CL) belong to a higher-layer cluster L3-CL in the layer L3 as lower-layer clusters thereof. Therefore, the number of vectors that can be managed by the higher-layer cluster L3-CL in the layer L3 is 256⁴.

As described above, each time a layer level is increased by one, the total number of manageable vectors increases by a factor of 256 (= 2⁸). Therefore, by setting the total number of layers included in the hierarchical cluster HC to a number that corresponds to the scale of a vector database to be constructed, a large-scale vector database exceeding a trillion scale can be constructed. For example, in a case where the total number of layers is set to eight, a maximum of 2⁶⁴ (= 2^{8×8}) vectors can be managed.

The hybrid index information 22 corresponding to the hierarchical cluster HC illustrated in FIG. 2 may include, for each higher-layer cluster, for example, (1) a list of lower-layer clusters that indicates an identifier of each of lower-layer clusters that belong to a higher-layer cluster, (2) relative position information (first relative position information) that indicates a positional relationship between the reference position of the higher-layer cluster and the reference position of each lower-layer cluster belonging to the higher-layer cluster, (3) a list of the same-layer clusters that indicates an identifier of each of the same-layer clusters that correspond to the higher-layer cluster, and (4) relative position information (second relative position information) that indicates a positional relationship between the reference position of the higher-layer cluster and the reference position of each same-layer cluster corresponding to the higher-layer cluster. Here, the same-layer clusters corresponding to a higher-layer cluster are clusters other than the higher-layer cluster in a layer that includes the higher-layer cluster.

The first relative position information may include, for example, any one or both of distance information and direction information. The distance information indicates a distance between the reference position of a higher-layer cluster and the reference position of each lower-layer cluster. The direction information represents a direction from the reference position of the higher-layer cluster to the reference position of each lower-layer cluster.

The second relative position information may include, for example, any one or both of distance information and direction information. The distance information indicates a distance between the reference position of a higher-layer cluster and the reference position of each same-layer cluster. The direction information represents a direction from the reference position of the higher-layer cluster to the reference position of each same-layer cluster.

These pieces of relative position information (the first relative position information and the second relative position information) are information acquired in advance by preliminary calculation or the like. By using the pieces of relative position information (the first relative position information and the second relative position information), it is possible to efficiently search for a cluster having a reference position closest to the query from a plurality of lower-layer clusters that belong to a higher-layer cluster. Details of a search process using the pieces of relative position information (the first relative position information and the second relative position information) will be described below.

In addition, the hybrid index information 22 corresponding to the hierarchical cluster HC may include, for each lowest-layer cluster, for example, (1) a list of belonging vectors that indicates an identifier of each of the vectors that belong to a lowest-layer cluster, (2) relative position information (third relative position information) that indicates a positional relationship between the reference position of the lowest-layer cluster and each vector belonging to the lowest-layer cluster, (3) relative position information (fourth relative position information) that indicates a positional relationship between the vectors belonging to the lowest-layer cluster, (4) a list indicating one or more auxiliary reference positions set in the lowest-layer cluster, and (5) relative position information (fifth relative position information) that indicates a positional relationship between each auxiliary reference position set in the lowest-layer cluster and each vector belonging to the lowest-layer cluster. Each auxiliary reference position is set in the lowest-layer cluster and is different from the reference position of the lowest-layer cluster. Each auxiliary reference position is represented by a vector having the same number of dimensions as the number of dimensions of each vector in the data set 21. In other words, similarly to each vector in the data set 21, each auxiliary reference position corresponds to one point in the data space (D-dimensional vector space) and is represented by a D-dimensional vector. Therefore, hereinafter, an auxiliary reference position is also referred to as an auxiliary reference vector. For example, as an auxiliary reference position, any one of the vectors belonging to the corresponding lowest-layer cluster may be used.

The third relative position information may include any one or both of distance information and direction information. The distance information indicates a distance between the reference position of a lowest-layer cluster and each vector belonging to the lowest-layer cluster. The direction information represents a direction from the reference position of the lowest-layer cluster to each vector belonging to the lowest-layer cluster.

The fourth relative position information indicates pairwise relative positions of vectors that belong to each lowest-layer cluster. The fourth relative position information may include any one or both of distance information and direction information. The distance information indicates a distance between a vector belonging to a lowest-layer cluster and each of the other vectors belonging to the lowest-layer cluster. The direction information represents a direction from the vector belonging to the lowest-layer cluster to each of the other vectors belonging to the lowest-layer cluster.

The fifth relative position information may include any one or both of distance information and direction information. The distance information indicates a distance between each auxiliary reference position of a lowest-layer cluster and each vector belonging to the lowest-layer cluster. The direction information represents a direction from each auxiliary reference position of the lowest-layer cluster to each vector belonging to the lowest-layer cluster.

These pieces of relative position information (the third relative position information, the fourth relative position information, and the fifth relative position information) are information acquired in advance by preliminary calculation or the like. By using the pieces of relative position information, it is possible to efficiently search for a vector closest to the query among the vectors belonging to the lowest-layer cluster to be searched. Details of the search process using the pieces of relative position information will be described below.

Further, the hybrid index information 22 corresponding to the hierarchical cluster HC may include, for each lowest-layer cluster, (6) relative position information (sixth relative position information) that indicates a positional relationship between the reference position of a lowest-layer cluster and the reference position of each same-layer cluster corresponding to the lowest-layer cluster, (7) a neighbor list that indicates an identifier of each of neighbor clusters that is connected to the lowest-layer cluster by an edge, and (8) relative position information (seventh relative position information) that indicates a positional relationship between the reference position of the lowest-layer cluster and the reference position of each neighbor cluster corresponding to the lowest-layer cluster.

The sixth relative position information may include any one or both of distance information and direction information. The distance information indicates a distance between the reference position of a lowest-layer cluster and the reference position of each same-layer cluster. The direction information represents a direction from the reference position of the lowest-layer cluster to the reference position of each same-layer cluster.

The seventh relative position information may include any one or both of distance information and direction information. The distance information indicates a distance between the reference position of a lowest-layer cluster and the reference position of each neighbor cluster corresponding to the lowest-layer cluster. The direction information represents a direction from the reference position of the lowest-layer cluster to the reference position of each neighbor cluster corresponding to the lowest-layer cluster.

These pieces of relative position information (the sixth relative position information and the seventh relative position information) are information acquired in advance by preliminary calculation or the like. By using the pieces of relative position information, it is possible to efficiently search for a lowest-layer cluster having a reference position closest to the query from lowest-layer clusters that belong to a higher-layer cluster of the layer L1.

Next, an example of a search process using the hierarchical cluster HC and the inter-cluster graph CG will be described. FIG. 3 is a diagram illustrating an example of the search process executed in the approximate nearest neighbor search system 1 by using the hybrid index structure.

In response to reception of a query (query vector) Q based on a query from the external device 2, the processor 11 starts the search process for searching for an approximate nearest neighbor vector of the query Q from the data set 21.

The search process includes (1) an approximate nearest neighbor cluster search process for searching for a lowest-layer cluster (approximate nearest neighbor cluster) having a reference position closest to the query Q, and (2) an approximate nearest neighbor vector search process of searching for the approximate nearest neighbor vector of the query Q from a group of vectors belonging to the approximate nearest neighbor cluster. Note that the approximate nearest neighbor vector search process may be a process of searching for the approximate nearest neighbor vector of the query Q from the group of the vectors belonging to the approximate nearest neighbor cluster and a group of vectors belonging to each of one or more lowest-layer clusters that are close to the approximate nearest neighbor cluster.

The approximate nearest neighbor cluster search process starts from the highest layer L3.

The processor 11 sets the highest-layer cluster L3-CL as a target cluster of the approximate nearest neighbor cluster search process. The processor 11 finds a lower-layer cluster having a reference position closest to the query Q from the lower-layer clusters (here, the higher-layer clusters L2-CL1 to L2-CL5 of the layer L2) that belong to the highest-layer cluster L3-CL. In FIG. 3, among the lower-layer clusters (the higher-layer clusters L2-CL1 to L2-CL5 of the layer L2) that belong to the highest-layer cluster L3-CL, a lower-layer cluster having a reference position closest to the query Q is the higher-layer cluster L2-CL1. Therefore, the higher-layer cluster L2-CL1 is found as the lower-layer cluster that belongs to the highest-layer cluster L3-CL and has the reference position closest to the query Q.

When the higher-layer cluster L2-CL1 has been found as the lower-layer cluster that belongs to the highest-layer cluster L3-CL and has the reference position closest to the query Q, the processor 11 sets the higher-layer cluster L2-CL1 as a new target cluster. The processor 11 finds a lower-layer cluster having a reference position closest to the query Q from the lower-layer clusters (here, the higher-layer clusters L1-CL1 to L1-CL5 of the layer L1) that belong to the higher-layer cluster L2-CL1. In FIG. 3, among the lower-layer clusters (the higher-layer clusters L1-CL1 to L1-CL5 of the layer L1) that belong to the higher-layer cluster L2-CL1, a lower-layer cluster having a reference position closest to the query Q is the higher-layer cluster L1-CL1. Therefore, the higher-layer cluster L1-CL1 is found as the lower-layer cluster that belongs to the higher-layer cluster L2-CL1 and has the reference position closest to the query Q.

When the higher-layer cluster L1-CL1 has been found as the lower-layer cluster that belongs to the higher-layer cluster L2-CL and has the reference position closest to the query Q, the processor 11 sets the higher-layer cluster L1-CL1 as a new target cluster. The processor 11 finds a lower-layer cluster having a reference position closest to the query Q from the lower-layer clusters (here, the lowest-layer clusters CL1 to CL5 of the layer L0) that belong to the higher-layer cluster L1-CL1. In FIG. 3, among the lower-layer clusters (the lowest-layer clusters CL1 to CL5 of the layer L0) that belong to the higher-layer cluster L1-CL1, a lower-layer cluster having a reference position closest to the query Q is the lowest-layer cluster CL3. Therefore, the lowest-layer cluster CL3 is found as the lower-layer cluster that belongs to the higher-layer cluster L1-CL1 and has the reference position closest to the query Q. The lowest-layer cluster CL3 is determined as the approximate nearest neighbor cluster, that is, a search start cluster for the approximate nearest neighbor vector search process.

As described above, in the approximate nearest neighbor cluster search process, a search process for finding a lower-layer cluster having a reference position closest to the query Q for each layer is repeatedly executed until one of the plurality of lowest-layer clusters CL is found as a lower-layer cluster having a reference position closest to the query Q. Then, among the plurality of lowest-layer clusters CL, the lowest-layer cluster having the reference position closest to the query Q is determined as the approximate nearest neighbor cluster.

When the lowest-layer cluster CL3 has been determined as the approximate nearest neighbor cluster, the processor 11 searches the approximate nearest neighbor cluster (here, the lowest-layer cluster CL3), and finds, as a search result (i.e., approximate nearest neighbor vector), a vector closest to the query Q among the vectors V11 to V15 that belong to the lowest-layer cluster CL3. The search result (approximate nearest neighbor vector) is returned to the external device 2 as a response to the query Q.

Note that the processor 11 may set, as the search start cluster, a lowest-layer cluster having a reference position closest to the query Q among the plurality of lowest-layer clusters CL. In this case, the processor 11 searches one or more search target clusters (for example, the lowest-layer clusters CL1, CL2, and the like) that are close to the search start cluster (here, the lowest-layer cluster CL3) while traversing the inter-cluster graph CG, and finds, for each of the one or more search target clusters, a vector closest to the query Q among vectors that belong to a search target cluster as a nearest neighbor vector in the search target cluster.

Then, the processor 11 outputs, as the search result (approximate nearest neighbor vector), a vector closest to the query Q among the nearest neighbor vector found from the search start cluster (lowest-layer cluster CL3) and the nearest neighbor vectors found from the one or more search target clusters (for example, the lowest-layer clusters CL1, CL2, and the like). In this case, the search result (approximate nearest neighbor vector) is returned to the external device 2 as the response to the query Q.

Note that the search process of finding a lower-layer cluster closest to the query Q for each higher layer can be executed by using the relative position information acquired in advance by preliminary calculation or the like.

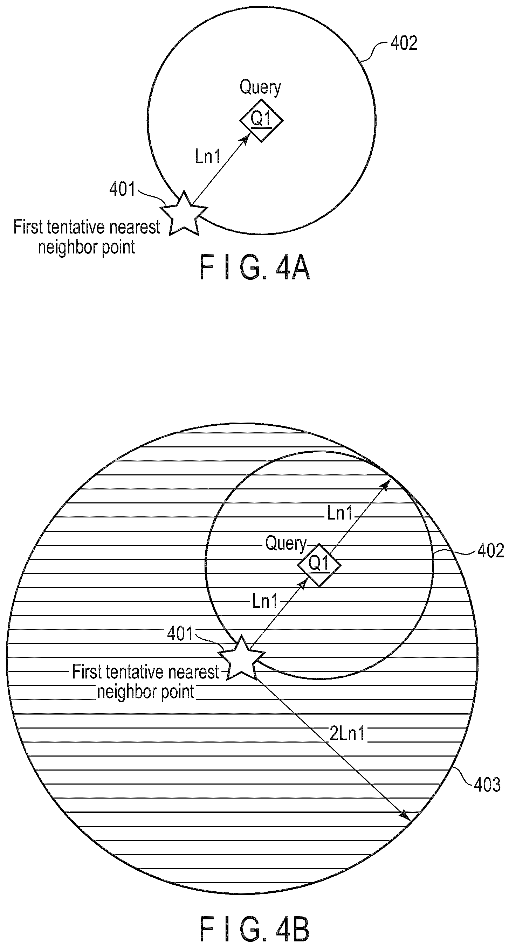

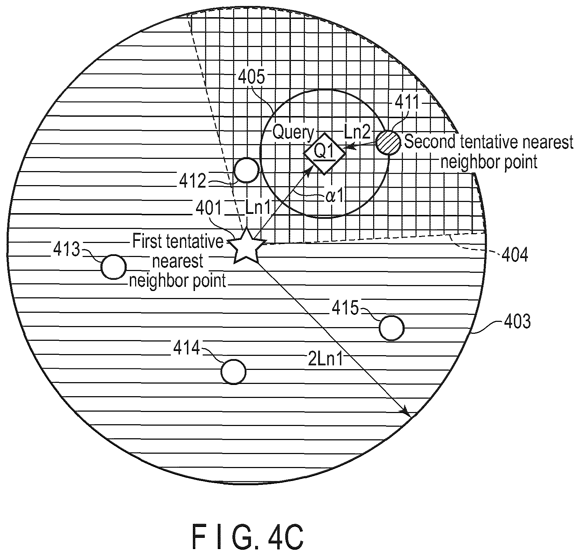

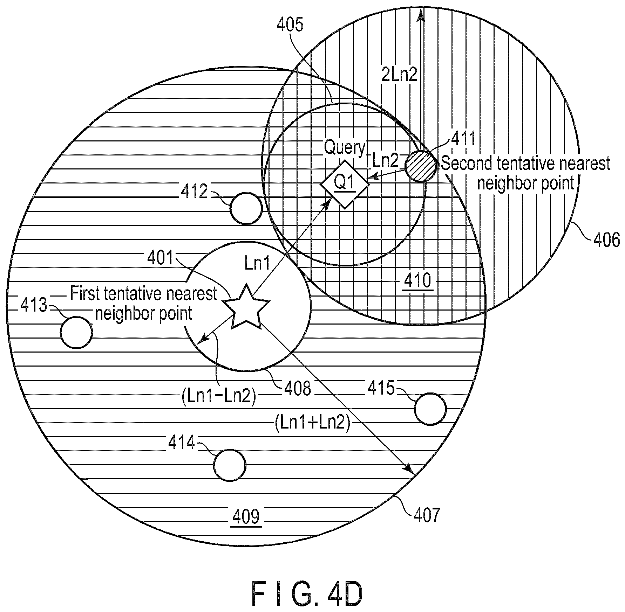

Next, an example of a principle of approximate nearest neighbor vector search using a distance between vectors and a direction between vectors will be described. FIGS. 4A, 4B, 4C, and 4D are diagrams for explaining an example of the principle of approximate nearest neighbor vector search using a distance between vectors and a direction between the vectors.

Here, a case is assumed where a query Q1 based on a query from the external device 2 is received and a first tentative nearest neighbor point 401 assumed to be close to the query Q1 is set. The first tentative nearest neighbor point 401 is, for example, a certain vector included in the data set 21 (vector database). The certain vector may be, for example, a vector having a specific ID among the plurality of vectors included in the data set 21, or may be a vector randomly selected from the plurality of vectors. Note that, in a case where each of the plurality of vectors belongs to any one of the plurality of lowest-layer clusters CL of the hierarchical cluster HC, and an approximate nearest neighbor cluster for the query Q1 among the plurality of lowest-layer clusters CL is determined, a reference vector of the approximate nearest neighbor cluster may be used as the first tentative nearest neighbor point 401. The approximate nearest neighbor cluster is a lowest-layer cluster having a reference vector closest to the query Q1. Hereinafter, a case where an approximate nearest neighbor vector is acquired from N vectors (D-dimensional vectors) that belong to the approximate nearest neighbor cluster will be exemplified. That is, vectors to be searched are the N vectors.

First, as illustrated in FIG. 4A, the search unit 113 calculates a distance Ln1 between the first tentative nearest neighbor point 401 and the query Q1. A distance between vectors calculated by the search unit 113 is, for example, Euclidean distance. In this case, ideally, it is desirable to search vectors included in a region 402 within a radius Ln1 from the query Q1. In other words, it is desirable to exclude a vector outside the region 402 from the N vectors to be searched. However, a distance between the query Q1 and each vector is unknown until calculation. Therefore, it is necessary to calculate the distance between the query Q1 and each vector in order to determine whether each vector is inside or outside the region 402, which increases a calculation amount.

By contrast, as illustrated in FIG. 4B, the search unit 113 determines a search region 403 within a radius 2Ln1 from the first tentative nearest neighbor point 401. A vector within the search region 403 may be closer to the query Q1 than the first tentative nearest neighbor point 401.

The pairwise distances between the vectors are calculated in advance (that is, the pairwise distances between the vectors are calculated before receiving the query Q1). Specifically, for example, the distance between the first tentative nearest neighbor point 401 and each of the vectors to be searched is calculated in advance.

The search unit 113 determines whether each vector to be searched is within the search region 403 on the basis of the pairwise distances between the vectors calculated in advance. As a result, the search unit 113 can exclude M vectors outside the search region 403 from the N vectors to be searched. M is, for example, an integer of one or more.

The search region 403 includes (N-M) vectors. In the example illustrated in FIG. 4C, five vectors 411 to 415 are included in the search region 403. The search unit 113 determines that each of the five vectors 411 to 415 is within the search region 403 on the basis of the pairwise distances between the vectors calculated in advance.

In addition, the search unit 113 calculates direction information α1 that represents a direction from the first tentative nearest neighbor point 401 to the query Q1. The search unit 113 searches a specific direction region 404 centered on the direction information α1 in the search region 403 in order of closeness to the direction information α1.

The pairwise pieces of direction information between the vectors are calculated in advance. Specifically, for example, the direction information representing a direction from the first tentative nearest neighbor point 401 to each of the vectors 411 to 415 is calculated in advance. A specific method of calculating the direction information and a deviation between two pieces of direction information will be described below. The deviation between two pieces of direction information is also referred as a directional deviation.

Based on the pairwise distances between the vectors and the pairwise pieces of direction information between the vectors calculated in advance, the search unit 113 acquires the vector 411. The similarity between a combination of the direction information α1 and the distance Ln1 and a combination of the direction information and the distance information that corresponds to the vector 411 is equal to or higher than a first threshold. Specifically, the search unit 113 acquires, for example, the vector 411 that is within the search region 403 and corresponds to the direction information whose similarity to the direction information α1 is equal to or higher than a second threshold. Note that, in a case where a Hamming distance is used as a similarity (i.e., a degree of directional deviation) between pieces of direction information, the search unit 113 acquires, for example, the vector 411 that is within the search region 403 and corresponds to the direction information whose Hamming distance to the direction information α1 is equal to or shorter than a third threshold. In other words, the search unit 113 excludes, from the N vectors to be searched, vectors outside the search region 403 and P vectors each corresponding to the direction information whose Hamming distance to the direction information α1 exceeds the third threshold, thereby acquiring (N-P) vectors. P is, for example, an integer of one or more. The search unit 113 acquires the vector 411 from the (N-P) vectors.

The search unit 113 calculates the distance Ln2 between the acquired vector 411 and the query Q1. The search unit 113 determines whether or not the distance Ln2 is shorter than the distance Ln1. Here, since the distance Ln2 is shorter than the distance Ln1, the search unit 113 sets the vector 411 as a second tentative nearest neighbor point 411.

In this case, ideally, it is desirable to search vectors included in a region 405 within a radius Ln2 from the query Q1. In other words, it is desirable to exclude a vector outside the region 405 from the vectors to be searched. However, as described above, the distance between the query Q1 and each vector (for example, each of the vectors 412 to 415) is unknown until calculation.

Therefore, as illustrated in FIG. 4D, the search unit 113 determines a search region 406 within a radius 2Ln2 from the second tentative nearest neighbor point 411. A vector within the search region 406 may be closer to the query Q1 than the second tentative nearest neighbor point 411. The search unit 113 determines whether each vector to be searched is within the search region 406 on the basis of the pairwise distances between the vectors calculated in advance. As a result, the search unit 113 can exclude a vector outside the search region 406 from the vectors to be searched.

In addition, the search unit 113 determines a search region 409 obtained by excluding, from a region 407 within a radius (Ln1+Ln2) from the first tentative nearest neighbor point 401, a region 408 within a radius (Ln1-Ln2) from the first tentative nearest neighbor point 401. The radius (Ln1+Ln2) is a distance obtained by adding the distance Ln2 to the distance Ln1. The radius (Ln1-Ln2) is a distance obtained by subtracting the distance Ln2 from the distance Ln1. A vector within the search region 409 may be closer to the query Q1 than the second tentative nearest neighbor point 411. The search unit 113 determines whether each vector to be searched is within the search region 409 on the basis of the pairwise distances between the vectors calculated in advance. As a result, the search unit 113 can exclude a vector outside the search region 409 from the vectors to be searched. For example, the search unit 113 excludes, from (N-M) vectors to be searched, the second tentative nearest neighbor point 411 (vector 411) and L vectors outside the search region 409, thereby obtaining (N-M-L-1) vectors to be searched. L is, for example, an integer of one or more.

Furthermore, the search unit 113 determines a search region 410 in which the search region 406 and the search region 409 overlap each other. A vector within the search region 410 may be closer to the query Q1 than the second tentative nearest neighbor point 411. The search unit 113 determines whether or not each vector to be searched is within the search region 410 on the basis of the pairwise distances between the vectors calculated in advance, that is, on the basis of the distance between the first tentative nearest neighbor point 401 and each vector and the distance between the second tentative nearest neighbor point 411 and each vector. As a result, the search unit 113 can exclude a vector outside the search region 410 from the vectors to be searched.

Similarly to the process for the second tentative nearest neighbor point 411 explained above, in a case where a vector that has not been searched and has a distance from the query Q1 shorter than the distance Ln2 is within the search region 410, the search unit 113 further executes a process of narrowing the search region by using the vector as a new tentative nearest neighbor point and searching vectors within the narrowed search region. For example, the search unit 113 repeatedly executes the process until there is no yet-to-be-searched vector in the narrowed search region. The yet-to-be-searched vector is a vector whose distance from the query has not been calculated (evaluated).

In a case where there is no yet-to-be-searched vector within the search region, the search unit 113 outputs, as the approximate nearest neighbor vector, a vector finally set as the tentative nearest neighbor point. For example, in a case where there is no yet-to-be-searched vector within the search region 410, or in a case where there is no vector whose distance from the query Q1 is shorter than the distance Ln2 within the search region 410, the search unit 113 outputs, as the approximate nearest neighbor vector, the vector 411 set as the second tentative nearest neighbor point 411.

According to the principle of the approximate nearest neighbor vector search described above, the search unit 113 can narrow the search region of vectors by using the pairwise distances between the vectors and the pairwise directions between the vectors calculated in advance, and efficiently search for the approximate nearest neighbor vector.

Here, an example of a method of calculating direction information that represents a direction from a vector (first vector) to another vector (second vector) will be explained. Each of the first vector and the second vector is, for example, any one of a reference vector, an auxiliary reference vector, each vector included in the data set 21, and the query vector.

The search unit 113 compresses information on a direction indicated by a difference vector that is obtained by subtracting the first vector from the second vector, thereby calculating the direction information. More specifically, the search unit 113 acquires R subvectors from the difference vector. R is, for example, an integer of two or more. The search unit 113 converts the R subvectors into R bit values, respectively. The search unit 113 calculates (generates) a data string including the R bit values as the direction information.

Note that, in a case where the first vector and the second vector are D-dimensional vectors, the difference vector is a D-dimensional vector. Therefore, each of the R subvectors includes D/R elements (feature values). For example, in a case where the difference vector is a 2048-dimensional vector and the number R of subvectors is 32, each of the 32 subvectors includes 64 (= 2048/32) elements.

As a method of converting a subvector into a bit value, four examples (1) to (4) will be explained below.
(1) In a case where, among D/R elements included in the subvector, the number of elements each having a value of zero or larger (the number of first elements) is more than the number of elements each having a value smaller than zero (the number of second elements), the subvector is converted into a bit value "1". In a case where the number of first elements is equal to or fewer than the number of second elements, the subvector is converted into a bit value "0".
(2) In a case where one element of the D/R elements included in the subvector is zero or larger, the subvector is converted into a bit value "1". In a case where the one element is smaller than zero, the subvector is converted into a bit value "0". The one element is an element selected from the D/R elements according to a certain rule. Specifically, the one element is, for example, an element in a specific order (for example, the third element) among the D/R elements.
(3) In a case where, among the D/R elements included in the subvector, an absolute value of the sum (an absolute value of a first sum) of elements each having a positive value is larger than an absolute value of the sum (an absolute value of a second sum) of elements each having a negative value, the subvector is converted into a bit value "1". In a case where the absolute value of the first sum is equal to or smaller than the absolute value of the second sum, the subvector is converted into a bit value "0".
(4) In a case where, among the D/R elements included in the subvector, the sum of squares (first sum of squares) of elements each having a positive value is larger than the sum of squares (second sum of squares) of elements each having a negative value, the subvector is converted into a bit value "1". In a case where the first sum of squares is equal to or smaller than the second sum of squares, the subvector is converted into the bit value "0".

Further, a directional deviation between a piece of direction information (first direction information) and another piece of direction information (second direction information) is represented by, for example, a Hamming distance between the first direction information and the second direction information.

The Hamming distance between the two pieces of direction information is represented by the number of bits that are different in a case where each bit is sequentially compared between two R-bit data strings that correspond to the two pieces of direction information, respectively. Therefore, the Hamming distance between the pieces of direction information of two vectors is any value from zero to R. For example, the search unit 113 performs an exclusive-logical-OR operation on the two R-bit data strings and counts the number of bits each having a value of 1, thereby acquiring the Hamming distance between the pieces of direction information of the two vectors.

According to the above method, the approximate nearest neighbor search system 1 can calculate the direction information from a vector to another vector and the directional deviation between two pieces of direction information.

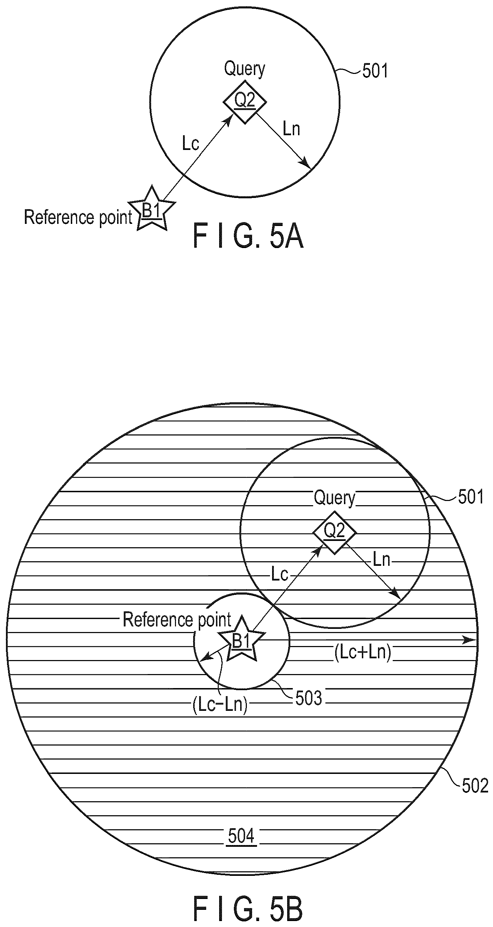

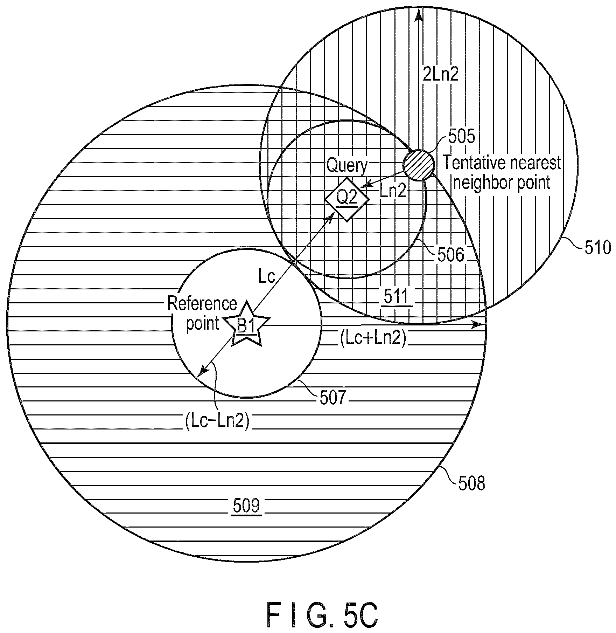

Note that the approximate nearest neighbor vector search may be performed by using only the pairwise distances between the vectors. FIGS. 5A, 5B, and 5C are diagrams for explaining an example of the principle of the approximate nearest neighbor vector search using the pairwise distances between the vectors.

Here, a case is assumed where when a query Q2 based on a query from the external device 2 has been received and a tentative nearest neighbor point and a tentative nearest neighbor distance Ln have been obtained by searching any cluster (lowest-layer cluster) based on the query Q2, the approximate nearest neighbor vector search is further performed on another cluster as a target cluster. The tentative nearest neighbor distance Ln is the distance between the tentative nearest neighbor point and the query Q2. N vectors belong to the target cluster. It is assumed that a reference point B1 (reference vector B1) is set in the target cluster, and the pairwise distances between the vectors are calculated in advance.

As illustrated in FIG. 5A, the search unit 113 calculates the distance Lc between the reference point B1 of the target cluster and the query Q2. The distance Lc is longer than the tentative nearest neighbor distance Ln. In this case, ideally, it is desirable to search vectors included in a region 501 within a radius Ln from the query Q2. However, the distance between the query Q2 and each vector belonging to the target cluster is unknown until calculation. Therefore, it is necessary to calculate the distance between the query Q2 and each vector in order to determine whether each vector is inside or outside the region 501, which increases a calculation amount.

By contrast, as illustrated in FIG. 5B, the search unit 113 determines a search region 504 obtained by excluding, from a region 502 within a radius (Lc+Ln) from the reference point B1, a region 503 within a radius (Lc-Ln) from the reference point B1. The radius (Lc+Ln) is a distance obtained by adding the tentative nearest neighbor distance Ln to the distance Lc. The radius (Lc-Ln) is a distance obtained by subtracting the tentative nearest neighbor distance Ln from the distance Lc. The search region 504 is centered on the reference point B1 and includes all vectors whose distances from the query Q2 may be shorter than the tentative nearest neighbor distance Ln.

Next, as illustrated in FIG. 5C, the search unit 113 selects a vector 505 within the search region 504 from the N vectors that belong to the target cluster. The search unit 113 calculates a distance Ln2 between the vector 505 and the query Q2. The search unit 113 determines whether or not the distance Ln2 is shorter than the tentative nearest neighbor distance Ln. Here, since the distance Ln2 is shorter than the tentative nearest neighbor distance Ln, the search unit 113 sets the vector 505 as a new tentative nearest neighbor point. In addition, the search unit 113 sets the distance Ln2 as a new tentative nearest neighbor distance.

The search unit 113 determines a search region 509 obtained by excluding, from a region 508 within a radius (Lc+Ln2) from the reference point B1, a range 507 within a radius (Lc-Ln2) from the reference point B1. The radius (Lc+Ln2) is a distance obtained by adding the tentative nearest neighbor distance Ln2 to the distance Lc. The radius (Lc-Ln2) is a distance obtained by subtracting the tentative nearest neighbor distance Ln2 from the distance Lc. The search region 509 includes all vectors whose distances from the query Q2 may be shorter than the tentative nearest neighbor distance Ln2. The search unit 113 determines whether or not each vector is within the search region 509 on the basis of the distance between the reference point B1 and each vector calculated in advance. As a result, the search unit 113 can exclude a vector outside the search region 509 from the vectors to be searched.

In addition, the search unit 113 determines a search region 510 within a radius 2Ln2 from the tentative nearest neighbor point 505. A vector within the search region 510 may be closer to the query Q2 than the tentative nearest neighbor point 505. The search unit 113 determines whether each vector to be searched is within the search region 510 on the basis of the pairwise distances between the vectors calculated in advance. As a result, the search unit 113 can exclude a vector outside the search region 510 from the vectors to be searched.

Further, the search unit 113 determines a search region 511 in which the search region 509 and the search region 510 overlap each other. A vector within the search region 511 may be closer to the query Q2 than the tentative nearest neighbor point 505. The search unit 113 determines whether or not each vector to be searched is within the search region 511 on the basis of the pairwise distances between the vectors calculated in advance, that is, on the basis of the distance between the reference point B1 and each vector and the distance between the tentative nearest neighbor point 505 and each vector. As a result, the search unit 113 can exclude a vector outside the search region 511 from the vectors to be searched.

In a case where a vector that has not been searched and has a distance shorter than the tentative nearest neighbor distance Ln from the query Q2 is within the search region 511, the search unit 113 further executes a process of narrowing the search region by using the vector as a new tentative nearest neighbor point and searching vectors within the narrowed search region. For example, the search unit 113 repeatedly executes the process until there is no yet-to-be-searched vector in the search region.

In a case where there is no yet-to-be-searched vector within the search region and in a case where the distance between the query Q2 and every yet-to-be-searched vector within the search region is equal to or longer than the tentative nearest neighbor distance, the search unit 113 outputs, as the approximate nearest neighbor vector, a vector finally set as the tentative nearest neighbor point. In the example illustrated in FIG. 5C, in a case where there is no yet-to-be-searched vector in the search region 511 and in a case where the distance between the query Q2 and every yet-to-be-searched vector within the search region 511 is equal to or longer than the tentative nearest neighbor distance Ln2, the search unit 113 outputs, as the approximate nearest neighbor vector, the vector 505 finally set as the tentative nearest neighbor point.

According to the principle of the approximate nearest neighbor vector search explained above, the search unit 113 can narrow the search region of vectors by using the pairwise distances between the vectors calculated in advance and efficiently search for the approximate nearest neighbor vector.

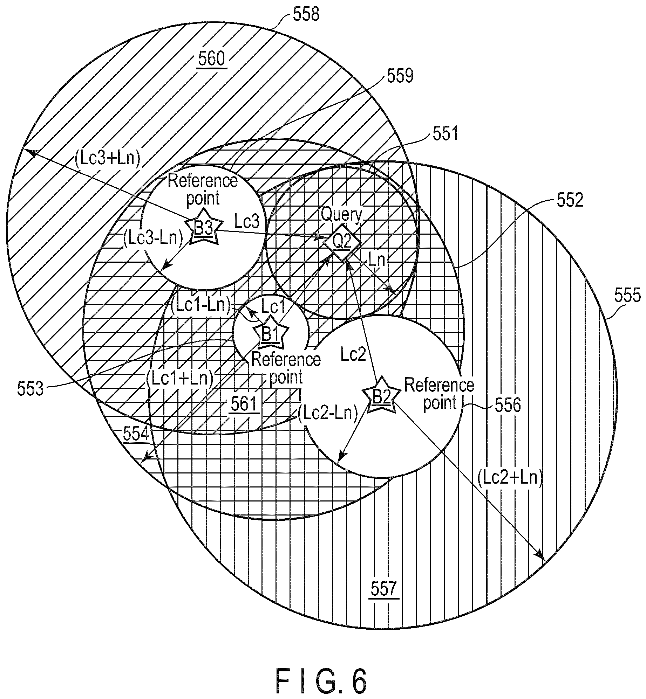

Note that a plurality of reference points (reference vectors) may be set in the target cluster. FIG. 6 is a diagram for explaining another example of the principle of the approximate nearest neighbor vector search using the pairwise distances between the vectors.

Similarly to the example illustrated in FIGS. 5A to 5C, a case is assumed where when the query Q2 based on a query from the external device 2 has been received, and the tentative nearest neighbor point and the tentative nearest neighbor distance Ln have been obtained by searching any cluster (lowest-layer cluster) based on the query Q2, the approximate nearest neighbor vector search is further performed on another cluster as the target cluster. It is assumed that three reference points B1, B2, and B3 (reference vectors B1, B2, and B3) are set in the target cluster, and the pairwise distances between the vectors are calculated in advance.

As illustrated in FIG. 6, the search unit 113 calculates the distance Lc1 between the reference point B1 and the query Q2. The search unit 113 calculates the distance Lc2 between the reference point B2 and the query Q2. The search unit 113 calculates the distance Lc3 between the reference point B3 and the query Q2. All the distances Lc1, Lc2, and Lc3 are longer than the tentative nearest neighbor distance Ln. In this case, ideally, it is desirable to search vectors included in a region 551 within a radius Ln from the query Q2. However, a distance between the query Q2 and each vector belonging to the target cluster is unknown until calculation. Therefore, it is necessary to calculate the distance between the query Q2 and each vector in order to determine whether each vector is inside or outside the region 551, which increases a calculation amount.

By contrast, the search unit 113 determines a search region 554 obtained by excluding, from a region 552 within a radius (Lc1+Ln) from the reference point B1, a region 553 within a radius (Lc1-Ln) from the reference point B1. The radius (Lc1+Ln) is a distance obtained by adding the tentative nearest neighbor distance Ln to the distance Lc1. The radius (Lc1-Ln) is a distance obtained by subtracting the tentative nearest neighbor distance Ln from the distance Lc1. The search region 554 is centered on the reference point B1 and includes vectors whose distances from the query Q2 may be shorter than the tentative nearest neighbor distance Ln. The search unit 113 determines whether or not each vector is within the search region 554 on the basis of the distance between the reference point B1 and each vector calculated in advance. As a result, the search unit 113 can exclude a vector outside the search region 554 from the vectors to be searched.

The search unit 113 determines a search region 557 obtained by excluding, from a region 555 within a radius (Lc2+Ln) from the reference point B2, a region 556 within a radius (Lc2-Ln) from the reference point B2. The radius (Lc2+Ln) is a distance obtained by adding the tentative nearest neighbor distance Ln to the distance Lc2. The radius (Lc2-Ln) is a distance obtained by subtracting the tentative nearest neighbor distance Ln from the distance Lc2. The search region 557 is centered on the reference point B2 and includes vectors whose distances from the query Q2 may be shorter than the tentative nearest neighbor distance Ln. The search unit 113 determines whether or not each vector is within the search region 557 on the basis of the distance between the reference point B2 and each vector calculated in advance. As a result, the search unit 113 can exclude a vector outside the search region 557 from the vectors to be searched.

The search unit 113 determines a search region 560 obtained by excluding, from a region 558 within a radius (Lc3+Ln) from the reference point B3, a region 559 within a radius (Lc3-Ln) from the reference point B3. The radius (Lc3+Ln) is a distance obtained by adding the tentative nearest neighbor distance Ln to the distance Lc3. The radius (Lc3-Ln) is a distance obtained by subtracting the tentative nearest neighbor distance Ln from the distance Lc3. The search region 560 is centered on the reference point B3 and includes vectors whose distances from the query Q2 may be shorter than the tentative nearest neighbor distance Ln. The search unit 113 determines whether or not each vector is within the search region 560 on the basis of the distance between the reference point B3 and each vector calculated in advance. As a result, the search unit 113 can exclude a vector outside the search region 560 from the vectors to be searched.

Further, the search unit 113 determines a search region 561 in which the search region 554, the search region 557, and the search region 560 overlap each other. The search unit 113 determines whether or not each vector to be searched is within the search region 561 on the basis of the pairwise distances between the vectors calculated in advance, that is, on the basis of the distance between the reference point B1 and each vector, the distance between the reference point B2 and each vector, and the distance between the reference point B3 and each vector. As a result, the search unit 113 can exclude a vector outside the search region 561 from the vectors to be searched.

In a case where a vector that has not been searched and has a distance from the query Q2 shorter than the tentative nearest neighbor distance Ln is within the search region 561, the search unit 113 further executes a process of narrowing the search region by using the vector as a new tentative nearest neighbor point and using the distance between the vector and the query Q2 as a new tentative nearest neighbor distance and searching vectors within the narrowed search region. For example, the search unit 113 repeatedly executes the process until there is no yet-to-be-searched vector in the search region.

In a case where there is no yet-to-be-searched vector within the search region and in a case where the distance between the query Q2 and every vector within the search region is equal to or longer than the tentative nearest neighbor distance, the search unit 113 outputs, as the approximate nearest neighbor vector, a vector finally set as the tentative nearest neighbor point.

According to the principle of the approximate nearest neighbor vector search described above, the search unit 113 can narrow the search region of vectors by using the distance between each of the plurality of reference points B1, B2, and B3 and each vector calculated in advance, and efficiently search for the approximate nearest neighbor vector.

Note that the principle of the approximate nearest neighbor vector search described above with reference to FIGS. 4 to 6 is also applicable to the approximate nearest neighbor cluster search.

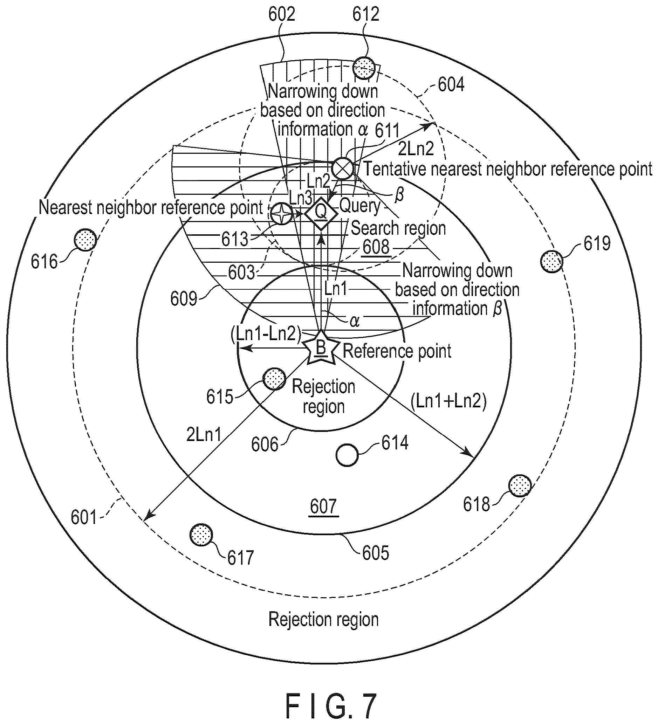

Next, with reference to FIGS. 7 to 11, examples of the approximate nearest neighbor cluster search and the approximate nearest neighbor vector search in a case where a query Q based on a query is received from the external device 2 will be specifically explained.

FIG. 7 illustrates an example of the approximate nearest neighbor cluster search using a distance between reference points (reference vectors) and a direction between the reference points, in the approximate nearest neighbor search system 1. For example, for each layer from the highest layer, the search unit 113 searches for the approximate nearest neighbor cluster from one or more lower-layer clusters that belong to a target higher layer by using the reference point of the target higher layer as an entry point. The approximate nearest neighbor cluster is used, for example, as a target cluster of the approximate nearest neighbor vector search.

Here, a case where the approximate nearest neighbor cluster is searched for from nine lower-layer clusters that belong to a higher layer by using a reference point B of the higher layer as an entry point will be exemplified. The nine lower-layer clusters have reference points 611 to 619, respectively. The reference points 611 to 619 of the lower-layer clusters are also referred to as lower-layer reference points 611 to 619.

The distance between the reference point B of the higher layer and each of the lower-layer reference points 611 to 619 is calculated in advance. Direction information that represents the direction from the reference point B of the higher layer to each of the lower-layer reference points 611 to 619 is calculated in advance. The pairwise distances between the lower-layer reference points 611 to 619 are calculated in advance. In addition, direction information that represents pairwise directions (mutual directions) between the lower-layer reference points 611 to 619 are calculated in advance.

First, the search unit 113 calculates the distance Ln1 between the reference point B and the query Q. The search unit 113 may set a search region 601 within a radius 2Ln1 from the reference point B. In the example illustrated in FIG. 7, seven lower-layer clusters are included in the search region 601. More specifically, the search region 601 includes the seven lower-layer reference points 611, 613, 614, 615, 617, 618, and 619.

As described above, the distance between the reference point B of the higher layer and each of the lower-layer reference points 611 to 619 is calculated in advance. Therefore, the search unit 113 can identify the lower-layer reference points 611, 613, 614, 615, 617, 618, and 619 within the search region 601 with a small calculation amount.

Next, the search unit 113 calculates direction information α that represents a direction from the reference point B to the query Q. The search unit 113 searches a specific direction region 602 centered on the direction information α in order of closeness to the direction information α. The search unit 113 acquires the lower-layer reference point 611 whose direction information from the reference point B is similar to the direction information α. Specifically, for example, since the deviation in direction (directional deviation) between the direction information α and the direction information from the reference point B to the lower-layer reference point 611 is small and the difference between the distance Ln1 and the distance from the reference point B to the lower-layer reference point 611 is small, the search unit 113 acquires the lower-layer reference point 611. That is, the search unit 113 acquires the lower-layer reference point 611 that has, with respect to the reference point B, a combination of the direction information and the distance whose similarity to a combination of the direction information α and the distance Ln1 is equal to or higher than a threshold. As a magnitude of the directional deviation, for example, a Hamming distance between two pieces of direction information is used. Then, the search unit 113 sets the lower-layer reference point 611 as a reference point of a tentative nearest neighbor cluster (i.e., tentative nearest neighbor reference point).

As described above, the direction information from the reference point B of the higher layer to each of the lower-layer reference points 611 to 619 is calculated in advance. Therefore, the search unit 113 can identify the lower-layer reference point 611 that has a small deviation between the direction information α and the direction information from the reference point B and has a small difference between the distance Ln1 and the distance from the reference point B, with a small calculation amount.

Note that the lower-layer reference point 612 is not set as the tentative nearest neighbor reference point because the distance from the reference point B exceeds the distance 2Ln1 (that is, outside the region 601) although the lower-layer reference point 612 is within the direction region 602 centered on the direction information α.

Next, the search unit 113 calculates the distance Ln2 between the tentative nearest neighbor reference point 611 and the query Q. In this case, ideally, it is desirable to search lower-layer reference points (lower-layer clusters) included in a region 603 within the radius Ln2 from the query Q. In other words, it is desirable to exclude a lower-layer reference point outside the region 603 from the lower-layer reference points to be searched. However, a distance between the query Q and each of the lower-layer reference points 612 to 619 is unknown until calculation.

Therefore, the search unit 113 calculates a region 604 within a radius 2Ln2 from the tentative nearest neighbor reference point 611. A lower-layer reference point within the region 604 may be closer to the query Q than the tentative nearest neighbor reference point 611. The search unit 113 determines whether or not each lower-layer reference point to be searched is within the region 604 on the basis of the pairwise distances between the lower-layer reference points calculated in advance. As a result, the search unit 113 can exclude a lower-layer reference point (lower-layer cluster) outside the search region 604 from the lower-layer reference points to be searched.

In addition, the search unit 113 determines a region 607 obtained by excluding, from a region 605 within a radius (Ln1+Ln2) from the reference point B, a region 606 within a radius (Ln1-Ln2) from the reference point B. The radius (Ln1+Ln2) is a distance obtained by adding the distance Ln2 to the distance Ln1. The radius (Ln1-Ln2) is a distance obtained by subtracting the distance Ln2 from the distance Ln1. The region 607 includes all lower-layer reference points whose distances from the query Q may be shorter than the distance Ln2. The search unit 113 determines whether or not each lower-layer reference point is within the region 607 on the basis of the distance between the reference point B and each lower-layer reference point calculated in advance. As a result, the search unit 113 can exclude a lower-layer reference point outside the region 607 from the lower-layer reference points to be searched.

Further, the search unit 113 determines a search region 608 in which the region 604 and the region 607 overlap each other. A lower-layer reference point within the search region 608 may be closer to the query Q than the tentative nearest neighbor reference point 611. The search unit 113 determines whether or not each lower-layer reference point to be searched is within the search region 608 on the basis of the pairwise distances between the reference points calculated in advance, that is, on the basis of the distance between the reference point B and each of the lower-layer reference points 611 to 619 and the distance between the tentative nearest neighbor reference point 611 and each of the other lower-layer reference points 612 to 619. As a result, the search unit 113 can exclude a lower-layer reference point outside the search region 608 from the lower-layer reference points to be searched.

In addition, the search unit 113 calculates direction information β that represents the direction from the tentative nearest neighbor reference point 611 to the query Q. The search unit 113 searches a region that is within the search region 608 and a specific direction range 609 centered on the direction information β, in order of closeness to the direction information β. The search unit 113 acquires the lower-layer reference point 613, since the lower-layer reference point 613 is within the search region 609 and the direction information from the tentative nearest neighbor reference point 611 to the lower-layer reference point 613 is similar to the direction information β. Specifically, for example, the search unit 113 acquires the lower-layer reference point 613 that is within the search region 609 and has a small deviation (for example, less than a threshold) between the direction information β and the direction information from the tentative nearest neighbor reference point 611 to the lower-layer reference point 613.

The direction information that represents a direction from the tentative nearest neighbor reference point 611 to each of the other lower-layer reference points 612 to 619 is calculated in advance. As described above, the distance between the reference point B and each of the lower-layer reference points 611 to 619 and the distance between the tentative nearest neighbor reference point 611 and each of the other lower-layer reference points 612 to 619 are calculated in advance. Therefore, the search unit 113 can identify the lower-layer reference point 613 which is within the search region 608 and has the direction information from the tentative nearest neighbor reference point 611 that is similar to the direction information β, with a small calculation amount.

Then, the search unit 113 calculates the distance Ln3 between the lower-layer reference point 613 and the query Q.

In a case where the distance Ln3 is equal to or longer than the distance Ln2, the search unit 113 repeatedly searches for a lower-layer reference point which is within the search region 608 and has the direction information from the tentative nearest neighbor reference point 611 that is similar to the direction information β, for example, until there is no yet-to-be-searched lower-layer reference point within the search region 608 or a lower-layer reference point whose distance from the query Q is shorter than the distance Ln2 is acquired from the search region 608.

On the other hand, in a case where the distance Ln3 is shorter than the distance Ln2, the search unit 113 sets the lower-layer reference point 613 as a new tentative nearest neighbor reference point. Then, similarly to the tentative nearest neighbor reference point 611 described above, the search unit 113 performs a search with respect to the new tentative nearest neighbor reference point 613.

For example, in the search with respect to the tentative nearest neighbor reference point 613, in a case where a new tentative nearest neighbor reference point is not set until there is no yet-to-be-searched lower-layer reference point, the search unit 113 determines the tentative nearest neighbor reference point 613 as the nearest neighbor reference point 613 as illustrated in FIG. 7. That is, the search unit 113 determines the lower-layer cluster having the nearest neighbor reference point 613 as the approximate nearest neighbor cluster. In a case where the determined approximate nearest neighbor cluster is the lowest-layer cluster, the approximate nearest neighbor cluster is used as the target cluster of the approximate nearest neighbor vector search.

Through the above approximate nearest neighbor cluster search, the search unit 113 can efficiently search for the approximate nearest neighbor cluster by using the pairwise distances between the reference points and the pairwise directions between the reference points calculated in advance.

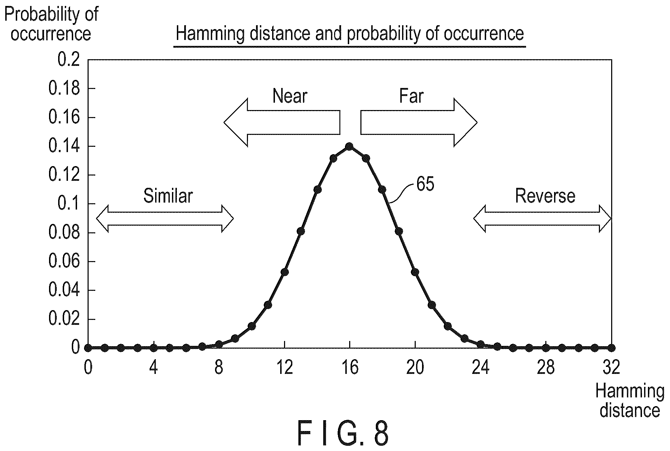

FIG. 8 is a diagram illustrating an example of a probability of occurrence of a vector to be searched according to a Hamming distance that represents a directional deviation between a query vector and the vector to be searched, in the approximate nearest neighbor search system 1. In FIG. 8, a horizontal axis represents the Hamming distance, and a vertical axis represents the probability of occurrence. For example, the vector to be searched may be a reference point (reference vector) of a lower-layer cluster belonging to a higher-layer cluster or may be a vector in the data set 21 (for example, a vector belonging to a lowest-layer cluster).

The directional deviation between the query vector and the vector to be searched is represented by, for example, the Hamming distance between the direction information of the query vector and the direction information of the vector to be searched. The direction information of the query vector represents, for example, the direction from a reference point to the query vector. The direction information of the vector to be searched represents, for example, the direction from the reference point to the vector to be searched.

Here, it is assumed that the direction information of the vector is a direction hash including a 32-bit data string. In this case, a Hamming distance between pieces of direction information of two vectors is represented by the number of bits that are different in a case where each bit is sequentially compared between the two 32-bit data strings. Therefore, the Hamming distance between the pieces of direction information of the two vectors is any integer value from 0 to 32. For example, the search unit 113 performs an exclusive OR operation on the two 32-bit data strings and counts the number of bits each having a value of 1, thereby acquiring the Hamming distance between the pieces of direction information of the two vectors.

For example, in a case where the Hamming distance is zero, the pieces of direction information of the two vectors match in all the bits. Furthermore, for example, in a case where the Hamming distance is 32, the pieces of direction information of the two vectors are different in all the bits.

Therefore, the shorter the Hamming distance, the more similar the pieces of direction information of the two vectors are. On the other hand, the longer the Hamming distance, the more different the pieces of direction information of the two vectors are. That is, as the Hamming distance is longer, one of the two vectors converges toward the direction opposite to the other vector.

A probability of occurrence 65 of the vector to be searched according to the Hamming distance between the query vector and the vector to be searched becomes maximum, for example, in a case of the intermediate Hamming distance (here, 16). Then, the probability of occurrence 65 of the vector to be searched decreases as the direction information of the vector to be searched approaches the direction information of the query vector from the direction information of the vector to be searched that corresponds to the intermediate Hamming distance (that is, as the Hamming distance between the pieces of direction information becomes shorter than the intermediate Hamming distance). Furthermore, the probability of occurrence 65 of the vector to be searched decreases as the direction information of the vector to be searched becomes less similar to the direction information of the query vector, from the direction information of the vector to be searched corresponding to the intermediate Hamming distance (that is, as the Hamming distance between the pieces of direction information becomes longer than the intermediate Hamming distance).

According to such a probability of occurrence 65 of the vector to be searched, for example, if a vector that has direction information from the reference point whose Hamming distance to the direction information from the reference point to the query vector is short is set as the tentative nearest neighbor point (for example, the tentative nearest neighbor reference point 611 of FIG. 7), it can be said that a calculation amount until acquiring the approximate nearest neighbor point tends to be small. On the other hand, if a vector that has direction information from the reference point whose Hamming distance to the direction information from the reference point to the query vector is long is set as the tentative nearest neighbor point, a search to acquire the approximate nearest neighbor point approaches a full search, and thus it can be said that the calculation amount until acquiring the approximate nearest neighbor point tends to be large.

Therefore, the search unit 113 sets, as the tentative nearest neighbor point, a vector having the direction information from the reference point that is similar to the direction information from the reference point to the query vector (that is, the Hamming distance is short) by using the pairwise pieces of direction information between the vectors calculated in advance. As a result, the search unit 113 can efficiently search for the approximate nearest neighbor point.

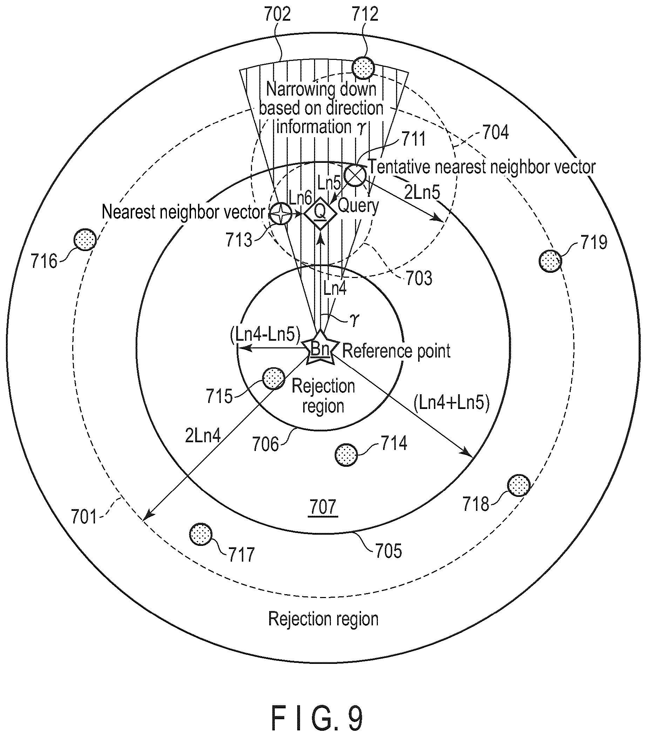

FIG. 9 is a diagram illustrating a first example of the approximate nearest neighbor vector search using a distance between vectors and a direction between the vectors, in the approximate nearest neighbor search system 1. For example, the search unit 113 searches for an approximate nearest neighbor vector from N vectors that belong to an approximate nearest neighbor cluster. Here, a case where the approximate nearest neighbor vector is searched for from an approximate nearest neighbor cluster having a reference point Bn will be exemplified. In the example illustrated in FIG. 9, nine vectors 711 to 719 belong to the approximate nearest neighbor cluster.

A distance between the reference point Bn and each of the vectors 711 to 719 is calculated in advance. Direction information that represents the direction from the reference point Bn to each of the vectors 711 to 719 is calculated in advance. Note that neither pairwise distances between the vectors 711 to 719 nor pieces of direction information that represent pairwise directions (mutual directions) between the vectors 711 to 719 are calculated in advance.

First, the search unit 113 calculates a distance Ln4 between the reference point Bn and the query Q.

The search unit 113 may set a search region 701 within a radius 2Ln4 from the reference point Bn. In the example illustrated in FIG. 9, the search region 701 includes the seven vectors 711, 713, 714, 715, 717, 718, and 719.

As described above, the distance between the reference point Bn and each of the vectors 711 to 719 is calculated in advance. Therefore, the search unit 113 can identify the vectors 711, 713, 714, 715, 717, 718, and 719 within the search region 701 with a small calculation amount.

Next, the search unit 113 calculates direction information γ that represents the direction from the reference point Bn to the query Q. The search unit 113 searches a specific direction region 702 centered on the direction information γ in order of closeness to the direction information γ. The search unit 113 acquires the vector 711 whose direction information from the reference point Bn is similar to the direction information γ. Specifically, for example, since a deviation (directional deviation) between the direction information γ and the direction information from the reference point Bn to the vector 711 is small and the difference between the distance Ln4 and the distance from the reference point Bn to the vector 711 is small, the search unit 113 acquires the vector 711. That is, the search unit 113 acquires the vector 711 that has, with respect to the reference point Bn, a combination of the direction information and the distance whose similarity to a combination of the direction information γ and the distance Ln4 is equal to or higher than a threshold. Then, the search unit 113 sets the vector 711 as a tentative nearest neighbor vector.

As described above, the direction information between the reference point Bn and each of the vectors 711 to 719 is calculated in advance. Therefore, the search unit 113 can identify the vector 711 that has the direction information from the reference point Bn whose deviation from the direction information γ is small and has the distance from the reference point Bn whose difference from the distance Ln4 is small, with a small calculation amount.

Note that the vector 712 is not set as the tentative nearest neighbor vector because the distance from the reference point Bn exceeds the distance 2Ln4 (that is, outside the region 701) although the vector 712 is within the direction region 702 centered on the direction information γ.

Next, the search unit 113 calculates the distance Ln5 between the tentative nearest neighbor vector 711 and the query **Q.** The search unit 113 sets the distance Ln5 as the tentative nearest neighbor distance. In this case, ideally, it is desirable to search vectors included in a region 703 within the radius Ln5 from the query **Q.** In other words, it is desirable to exclude a vector outside the region 703 from the vectors to be searched. However, the distance between the query Q and each of the vectors 712 to 719 is unknown until calculation.

Further, a vector included in a region 704 within a radius 2Ln5 from the tentative nearest neighbor vector 711 may be closer to the query Q than the tentative nearest neighbor vector 711. However, the distance between the tentative nearest neighbor vector 711 and each of the vectors 712 to 719 is also unknown until calculation.

Therefore, the search unit 113 determines a search region 707 obtained by excluding, from a region 705 within a radius (Ln4+Ln5) from the reference point Bn, a region 706 within a radius (Ln4-Ln5) from the reference point Bn. The radius (Ln4+Ln5) is a distance obtained by adding the distance Ln5 to the distance Ln4. The radius (Ln4-Ln5) is a distance obtained by subtracting the distance Ln5 from the distance Ln4. The search region 707 includes all vectors whose distances from the query Q may be shorter than the distance Ln5. The search unit 113 determines whether or not each vector is within the search region 707 on the basis of the distance between the reference point Bn and each vector calculated in advance. As a result, the search unit 113 can exclude a vector outside the search region 707 from the vectors to be searched.

The search unit 113 searches for a vector which is within the search region 707 and has the direction information from the reference point Bn that is similar to the direction information γ. In this search, the search unit 113 preferentially acquires a vector having direction information from the reference point Bn that greatly deviates from the direction information from the reference point Bn to the already searched vector (here, the tentative nearest neighbor vector 711). In the example illustrated in FIG. 9, the search unit 113 acquires the vector 713. The vector 713 is within the search region 707, and direction information from the reference point Bn to the vector 713 is similar to the direction information γ. In addition, the directional deviation between the direction information from the reference point Bn to the vector 713 and the direction information from the reference point Bn to the tentative nearest neighbor vector 711 is large (for example, larger than the directional deviation between the direction information from the reference point Bn to the vector 713 and the direction information γ).

The search unit 113 calculates a distance Ln6 between the vector 713 and the query Q. The search unit 113 determines whether or not the distance Ln6 is shorter than the tentative nearest neighbor distance Ln5. Here, since the distance Ln6 is shorter than the tentative nearest neighbor distance Ln5, the search unit 113 sets the vector 713 as a new tentative nearest neighbor vector. In addition, the search unit 113 sets the distance Ln6 as a new tentative nearest neighbor distance. Then, similarly to the case of the tentative nearest neighbor vector 711 explained above, the search unit 113 performs a search with respect to the new tentative nearest neighbor vector 713.

In the search with respect to the tentative nearest neighbor vector 713, in a case where a new tentative nearest neighbor vector is not set until there is no yet-to-be-searched vector, the search unit 113 determines the tentative nearest neighbor vector 713 as the nearest neighbor vector 713 as illustrated in FIG. 9. Then, the search unit 113 outputs the nearest neighbor vector 713 as the approximate nearest neighbor vector, for example.

Through the above approximate nearest neighbor vector search, the search unit 113 can efficiently search for the approximate nearest neighbor vector by using the distance between the reference point Bn and each of the vectors 711 to 719 and the direction information representing the direction from the reference point Bn to each of the vectors 711 to 719, which are calculated in advance.

Note that not only the reference point Bn but also one or more auxiliary reference points may be provided in the approximate nearest neighbor cluster.

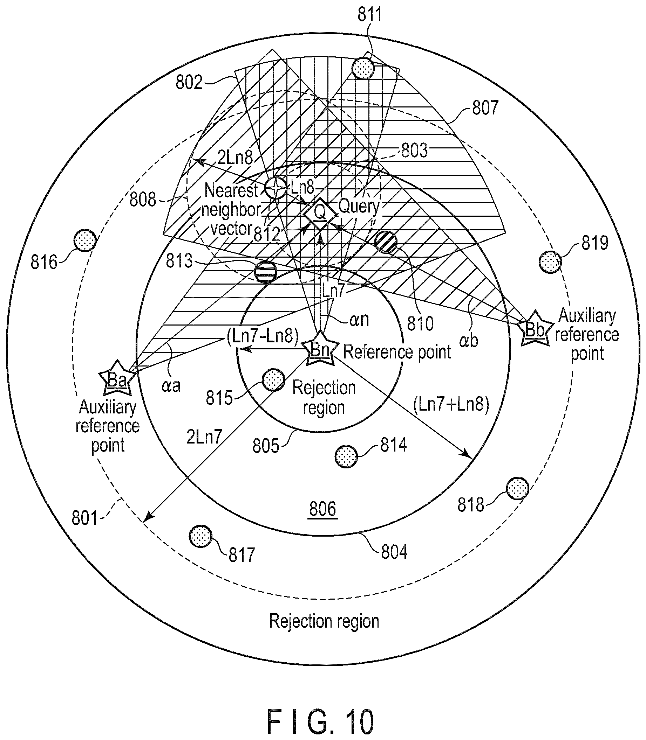

FIG. 10 is a diagram illustrating a second example of the approximate nearest neighbor vector search using a distance between vectors and a direction between the vectors, in the approximate nearest neighbor search system 1. Here, a case where an approximate nearest neighbor vector is searched for from an approximate nearest neighbor cluster having the reference point Bn and two auxiliary reference points Ba and Bb will be exemplified. It is assumed that ten vectors 810 to 819 belong to the approximate nearest neighbor cluster.

For example, the auxiliary reference point Ba is set at any position where a distance from the reference point Bn is an average (average distance) of distances between the reference point Bn and the ten respective vectors 810 to 819. The auxiliary reference point Bb is set, for example, at a position where a directional deviation from the direction information from the reference point Bn to each of all already set auxiliary reference points is the maximum and the distance from the reference point Bn is the average distance. In the example illustrated in FIG. 10, the auxiliary reference point Bb is set such that a directional deviation between the direction information from the reference point Bn to the auxiliary reference point Ba and the direction information from the reference point Bn to the auxiliary reference point Bb becomes maximum. Note that, here, an example in which the two auxiliary reference points Ba and Bb are set will be explained, but three or more auxiliary reference points may also be set.

The distance between the reference point Bn and each of the vectors 810 to 819 is calculated in advance. The direction information representing the direction from the reference point Bn to each of the vectors 810 to 819 is calculated in advance. The distance between the auxiliary reference point Ba and each of the vectors 810 to 819 is calculated in advance. The direction information representing the direction from the auxiliary reference point Ba to each of the vectors 810 to 819 is calculated in advance. The distance between the auxiliary reference point Bb and each of the vectors 810 to 819 is calculated in advance. The direction information representing the direction from the auxiliary reference point Bb to each of the vectors 810 to 819 is calculated in advance. Note that neither the pairwise distances between the vectors 810 to 819 nor the pieces of direction information representing pairwise directions (mutual directions) between the vectors 810 to 819 are calculated in advance.

First, the search unit 113 calculates the distance Ln7 between the reference point Bn and the query Q. The search unit 113 may set a search region 801 within a radius 2Ln7 from the reference point Bn. In the example illustrated in FIG. 10, the search region 801 includes the eight vectors 810, 812, 813, 814, 815, 817, 818, and 819.

As described above, the distance between the reference point Bn and each of the vectors 810 to 819 is calculated in advance. Therefore, the search unit 113 can identify the vectors 810, 812, 813, 814, 815, 817, 818, and 819 within the search region 801 with a small calculation amount.

Next, the search unit 113 calculates direction information αn representing the direction from the reference point Bn to the query Q. The search unit 113 searches a specific direction region 802 centered on the direction information αn in order of closeness to the direction information αn. The search unit 113 acquires the vector 812 whose direction information from the reference point Bn is similar to the direction information αn. Specifically, for example, since the directional deviation between the direction information αn and the direction information from the reference point Bn to the vector 812 is small and the difference between the distance Ln7 and the distance from the reference point Bn to the vector 812 is small, the search unit 113 acquires the vector 812. That is, the search unit 113 acquires the vector 812 that has, with respect to the reference point Bn, a combination of the direction information and the distance whose similarity to a combination of the direction information αn and the distance Ln7 is equal to or higher than a threshold. Then, the search unit 113 sets the vector 812 as a tentative nearest neighbor vector.

As described above, the direction information between the reference point Bn to each of the vector 810 to 819 is calculated in advance. Therefore, the search unit 113 can identify the vector 812 that has a small deviation between the direction information αn and the direction information from the reference point Bn and has a small difference between the distance Ln7 and the distance from the reference point Bn, with a small calculation amount.

Note that the vector 811 is not set as the tentative nearest neighbor vector because the distance from the reference point Bn exceeds the distance 2Ln7 (that is, outside the region 801) although the vector 811 is within the direction region 802 centered on the direction information αn.

Next, the search unit 113 calculates the distance Ln8 between the tentative nearest neighbor vector 812 and the query Q. The search unit 113 sets the distance Ln8 as a tentative nearest neighbor distance. In this case, ideally, it is desirable to search vectors included in a region 803 within the radius Ln8 from the query Q. In other words, it is desirable to exclude a vector outside the region 803 from the vectors to be searched. However, the distance between the query Q and each of the vectors 810, 811, and 813 to 819 is unknown until calculation.

Further, a vector included in a region 808 within a radius 2Ln8 from the tentative nearest neighbor vector 812 may be closer to the query Q than the tentative nearest neighbor vector 812. However, the distance between the tentative nearest neighbor vector 812 and each of the vectors 810, 811, and 813 to 819 is also unknown until calculation.

Therefore, the search unit 113 determines a search region 806 obtained by excluding, from a region 804 within a radius (Ln7+Ln8) from the reference point Bn, a region 805 within a radius (Ln7-Ln8) from the reference point Bn. The radius (Ln7+Ln8) is a distance obtained by adding the distance Ln8 to the distance Ln7. The radius (Ln7-Ln8) is a distance obtained by subtracting the distance Ln8 from the distance Ln7. The search region 806 includes all vectors whose distances from the query Q may be shorter than the distance Ln8. The search unit 113 determines whether or not each vector is within the search region 806, based on the distance between the reference point Bn and each vector calculated in advance. As a result, the search unit 113 can exclude a vector outside the search region 806 from the vectors to be searched.

Next, the search unit 113 calculates direction information αa representing the direction from the auxiliary reference point Ba to the query Q. In addition, the search unit 113 calculates direction information αb representing the direction from the auxiliary reference point Bb to the query Q.

For example, the search unit 113 calculates, for each of the vectors 810, 812, 813, and 814 within the search region 806, the sum of directional deviations (for example, Hamming distances) from the pieces of direction information αn, αa, and αb.

For example, a case where the sum of the directional deviations from the pieces of direction information αn, αa, and αb is calculated for the vector 810 will be specifically explained. As described above, the direction information from the reference point Bn to the vector 810, the direction information from the auxiliary reference point Ba to the vector 810, and the direction information from the auxiliary reference point Bb to the vector 810 are calculated in advance. In this case, the search unit 113 calculates a first Hamming distance between the direction information αn and the direction information from the reference point Bn to the vector 810. The search unit 113 calculates a second Hamming distance between the direction information αa and the direction information from the auxiliary reference point Ba to the vector 810. The search unit 113 calculates a third Hamming distance between the direction information αb and the direction information from the auxiliary reference point Bb to the vector 810. Then, the search unit 113 calculates the sum of the first Hamming distance, the second Hamming distance, and the third Hamming distance, thereby acquiring the sum of the directional deviations from the pieces of direction information αn, αa, and αb that corresponds to the vector 810.

Note that the search unit 113 may acquire the sum of the directional deviations from the pieces of direction information αn, αa, and αb that corresponds to the vector 810 by multiplying the sum of the first Hamming distance, the second Hamming distance, and the third Hamming distance by a weight according to the difference between the distance Ln7 and the distance between the vector 810 and the reference point Bn. For example, the search unit 113 uses a larger weight as the difference between the distance Ln7 and the distance between the vector 810 and the reference point Bn is larger, and uses a smaller weight as the difference between the distance Ln7 and the distance between the vector 810 and the reference point Bn is smaller. This is because the smaller the difference in the distance, the higher the possibility that the vector becomes the nearest neighbor vector even if there is a directional deviation.

The search unit 113 similarly acquires, for each of the other vectors 812, 813, and 814, the sum of the directional deviations from the direction information αn, αa, and αb.

The search unit 113 evaluates that the smaller the acquired sum of the directional deviations, the higher the possibility that the corresponding vector is the nearest neighbor vector. For example, the search unit 113 acquires S vectors each for which the sum of the directional deviations that is smaller than a fourth threshold, as candidate vectors of the nearest neighbor vector. Note that the search unit 113 may acquire S vectors each for which the smaller sum of the directional deviations, as the candidate vectors of the nearest neighbor vector. S is, for example, an integer of one or more. The search unit 113 calculates the distance between each of the S candidate vectors and the query Q. Then, the search unit 113 outputs, for example, a candidate vector having the minimum distance from the query Q as the approximate nearest neighbor vector.

In FIG. 10, the search unit 113 acquires, for example, the three vectors 812, 810, and 813 each for which the smaller sum of the directional deviations, as the candidate vectors of the nearest neighbor vector. The search unit 113 calculates the distance between each of the three candidate vectors 812, 810, and 813 and the query Q. Then, the search unit 113 outputs, for example, the candidate vector 812 having the minimum distance from the query Q as the approximate nearest neighbor vector.

By the above approximate nearest neighbor vector search, the search unit 113 can efficiently search for the approximate nearest neighbor vector by using the distance between the reference point Bn and each of the vectors 810 to 819, the direction information representing the direction from the reference point Bn to each of the vectors 810 to 819, the distance between the auxiliary reference point Ba and each of the vectors 810 to 819, the direction information representing the direction from the auxiliary reference point Ba to each of the vectors 810 to 819, the distance between the auxiliary reference point Bb and each of the vectors 810 to 819, and the direction information representing the direction from the auxiliary reference point Bb to each of the vectors 810 to 819, which are calculated in advance.

Note that, before calculating the distance between the query and a vector, the search unit 113 may narrow the search region in which the approximate nearest neighbor vector is searched for (alternatively, the search region in which the approximate nearest neighbor cluster is searched for) by using the reference point and the plurality of auxiliary reference points.

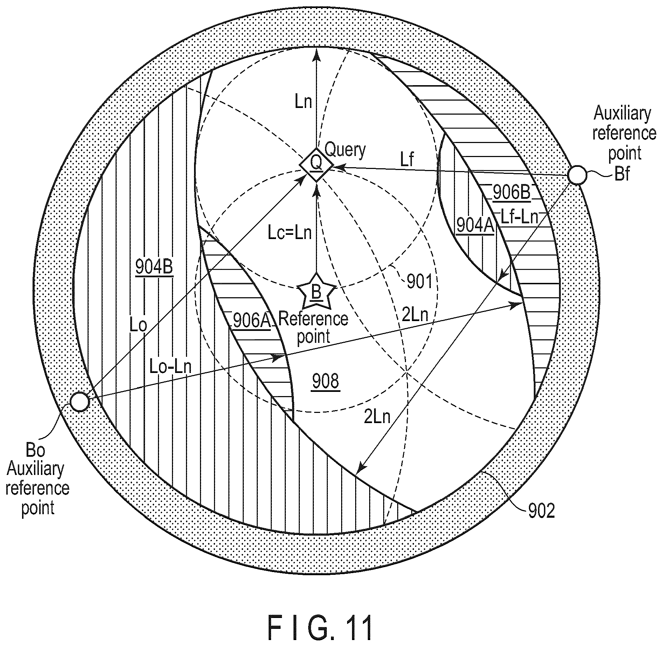

FIG. 11 illustrates an example of a search region of an approximate nearest neighbor vector narrowed by using a reference point and a plurality of auxiliary reference points, in the approximate nearest neighbor search system 1. The plurality of auxiliary reference points are desirably located at positions evenly distributed in a cluster to be searched. Here, a case where the approximate nearest neighbor vector is searched for from an approximate nearest neighbor cluster that has the reference point B and two auxiliary reference points Bf and Bo will be exemplified.

First, the search unit 113 calculates the distance Ln between the reference point B and the query Q. In this case, ideally, it is desirable to search vectors included in a region 901 within a radius Ln from the query Q. In other words, it is desirable to exclude a vector outside the region 901 from the vectors to be searched. However, a distance between the query Q and each vector is unknown until calculation. Therefore, it is necessary to calculate the distance between the query Q and each vector in order to determine whether each vector is inside or outside the region 901, which increases a calculation amount.

By contrast, as illustrated in FIG. 11, the search unit 113 determines a region 902 within a radius 2Ln from the reference point B. A vector within the region 902 may be closer to the query Q than the reference point B.

Next, the search unit 113 calculates the distance Lf between the auxiliary reference point Bf and the query Q. The search unit 113 excludes, from the region 902, an inner side 904A of a first region within a radius (Lf-Ln), which is a distance obtained by subtracting the distance Ln from the distance Lf, from the reference point Bf. The search unit 113 further excludes, from the region 902, an outer side 904B of a second region within a radius (Lf+Ln), which is a distance obtained by adding the distance Ln to the distance Lf, from the auxiliary reference point Bf.

Similarly, the search unit 113 calculates the distance Lo between the auxiliary reference point Bo and the query Q. The search unit 113 further excludes, from the region 902, an inner side 906A of a third region within a radius (Lo-Ln), which is a distance obtained by subtracting the distance Ln from the distance Lo, from the reference point Bo. In addition, the search unit 113 further excludes, from the region 902, an outer side 906B of a fourth region within a radius (Lo+Ln), which is a distance obtained by adding the distance Ln to the distance Lo, from the auxiliary reference point Bo.

As a result, the search unit 113 uses a region 908 obtained by excluding, from the region 902, the inner side 904A of the first region, the outer side 904B of the second region, the inner side 906A of the third region, and the outer side 906B of the fourth region, as the search region of the approximate nearest neighbor vector. Therefore, the search unit 113 can narrow the search region in which the approximate nearest neighbor vector is searched for by using the reference point and the plurality of auxiliary reference points before calculating the distance between the query and a vector.

Note that the method illustrated in FIG. 11 is also applicable to a case where the approximate nearest neighbor cluster is searched for from one or more lower-layer clusters (more specifically, their lower-layer reference points) belonging to a higher-layer cluster that has the reference point B and the plurality of auxiliary reference points.

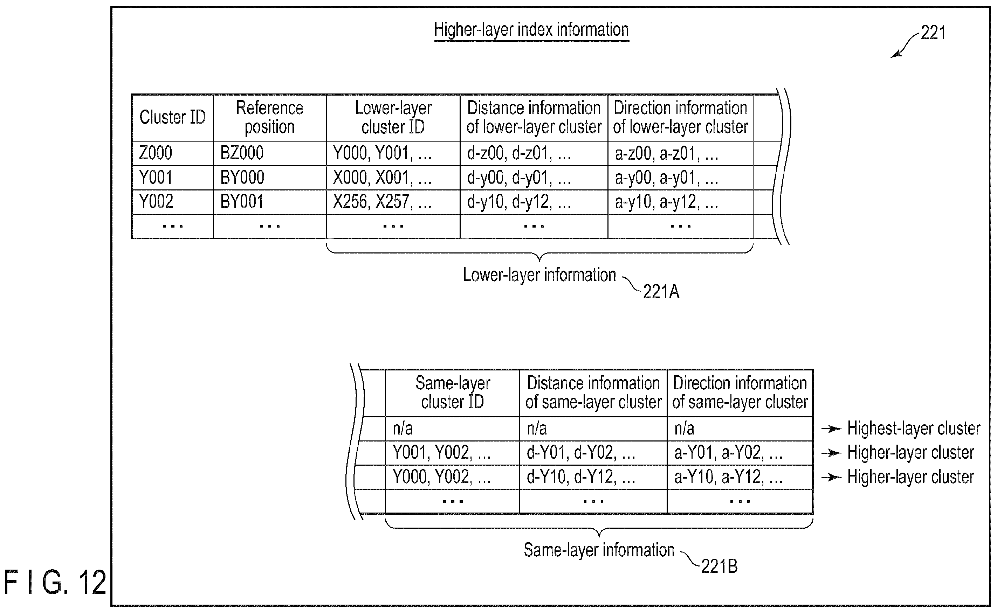

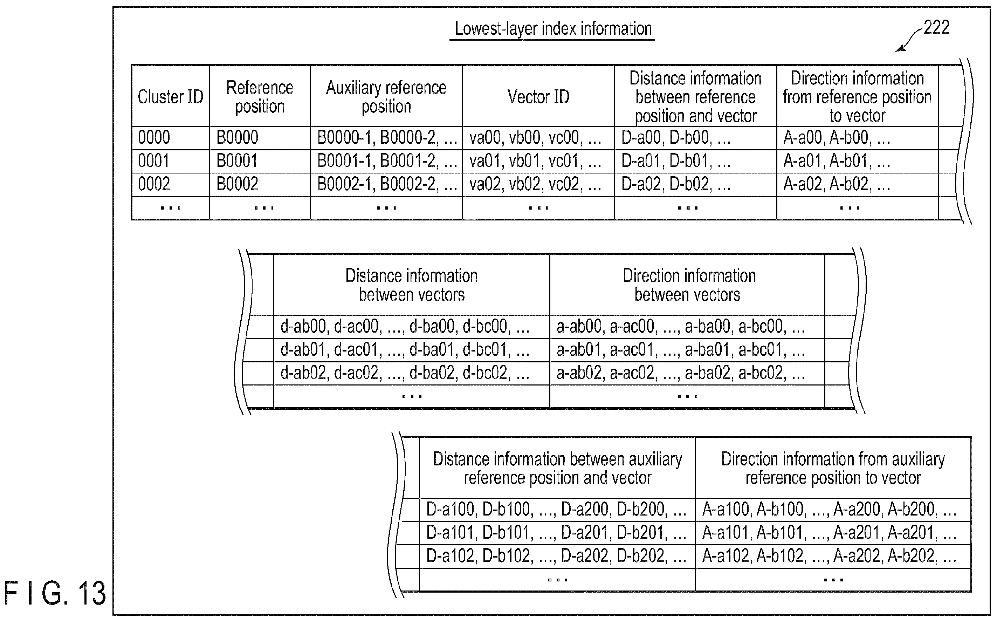

Next, a configuration of the hybrid index information 22 used in the approximate nearest neighbor search system 1 will be explained with reference to FIGS. 12 and 13. The hybrid index information 22 includes higher-layer index information 221 and lowest-layer index information 222.

FIG. 12 illustrates an example of a configuration of the higher-layer index information 221 used in the approximate nearest neighbor search system 1. The higher-layer index information 221 includes a plurality of entries that correspond to a plurality of higher-layer clusters, respectively. Each entry includes, for example, fields for cluster ID, reference position, lower-layer cluster ID, distance information of lower-layer cluster, direction information of lower-layer cluster, same-layer cluster ID, distance information of same-layer cluster, and direction information of same-layer cluster.

In an entry corresponding to a higher-layer cluster, the cluster ID field indicates identification information (cluster ID) assigned to the higher-layer cluster. The cluster ID is information by which the corresponding cluster is uniquely identifiable.

The reference position field indicates a reference position (absolute position information) of the corresponding higher-layer cluster. The reference position corresponds to, for example, any vector belonging to a lowest-layer cluster that directly or indirectly belongs to the higher-layer cluster.

The field for lower-layer cluster ID indicates a list of one or more cluster IDs respectively assigned to one or more lower-layer clusters that belong to the corresponding higher-layer cluster. In the field for lower-layer cluster ID, for example, the one or more cluster IDs are enumerated. Each of the lower-layer clusters belonging to the higher-layer cluster is also referred to as a belonging lower-layer cluster.

The field for distance information of lower-layer cluster indicates a distance (distance information) between the corresponding higher-layer cluster and each of the one or more lower-layer clusters that belong to the higher-layer cluster. Specifically, the field for distance information of lower-layer cluster indicates a distance between the reference position of the higher-layer cluster and the reference position of each of the one or more belonging lower-layer clusters. In the field for distance information of lower-layer cluster, for example, one or more distances respectively corresponding to the one or more belonging lower-layer clusters are enumerated.

The field for direction information of lower-layer cluster indicates direction information representing a direction from the corresponding higher-layer cluster to each of the one or more lower-layer clusters that belong to the higher-layer cluster. Specifically, the field for direction information of lower-layer cluster indicates direction information representing the direction from the reference position of the higher-layer cluster to the reference position of each of the one or more belonging lower-layer clusters. In the field for direction information of lower-layer cluster, for example, one or more pieces of direction information respectively corresponding to the one or more belonging lower-layer clusters are enumerated.

Information set in the lower-layer cluster ID field, the field for distance information of lower-layer cluster, and the field for direction information of lower-layer cluster is also referred to as lower-layer information 221A.

The same-layer cluster ID field indicates a list of one or more cluster IDs respectively assigned to one or more clusters (same-layer clusters) that are located in the same layer as the corresponding higher-layer cluster. In the same-layer cluster ID field, for example, the one or more cluster IDs are enumerated.

The field for distance information of same-layer cluster indicates a distance (distance information) between the corresponding higher-layer cluster and each of the one or more same-layer clusters of the higher-layer cluster. Specifically, the field for distance information of same-layer cluster indicates a distance between the reference position of the higher-layer cluster and the reference position of each of the one or more same-layer clusters. In the field for distance information of same-layer cluster, for example, one or more distances respectively corresponding to the one or more same-layer clusters are enumerated.

The field for direction information of same-layer cluster indicates direction information representing a direction from the corresponding higher-layer cluster to each of the one or more same-layer clusters of the higher-layer cluster. Specifically, the field for direction information of same-layer cluster indicates direction information representing a direction from the reference position of the higher-layer cluster to the reference position of each of the one or more same-layer clusters. In the field for direction information of same-layer cluster, for example, one or more pieces of direction information respectively corresponding to the one or more same-layer clusters are enumerated.

Information set in the same-layer cluster ID field, the field for distance information of same-layer cluster, and the field for direction information of same-layer cluster is also referred to as same-layer information 221B.

In the example illustrated in FIG. 12, for example, in an entry corresponding to a highest-layer cluster to which a cluster ID "Z000" is assigned, a reference position "BZ000", lower-layer cluster IDs "Y000, Y001, ...", pieces of distance information of lower-layer cluster "d-z00, d-z01, ...", and pieces of direction information of lower-layer cluster "a-z00, a-z01, ..." are set. Note that, since the highest-layer cluster has no same-layer cluster, none of same-layer cluster ID, distance information of same-layer cluster, or direction information of same-layer cluster is set in the entry corresponding to the highest-layer cluster.

In addition, for example, in an entry corresponding to a higher-layer cluster to which a cluster ID "Y001" is assigned, a reference position "BY000", lower-layer cluster IDs "X000, X001, ...", pieces of distance information of lower-layer cluster "d-y00, d-y01, ...", pieces of direction information of lower-layer cluster "a-y00, a-y01, ...", same-layer cluster IDs "Y001, Y002, ...", pieces of distance information of same-layer cluster "d-Y01, d-Y02, ...", and pieces of direction information of same-layer cluster "a-Y01, a-Y02, ..." are set.

With the above configuration, the search unit 113 can perform the approximate nearest neighbor cluster search by using the higher-layer index information 221. Note that the distance information of lower-layer cluster and the direction information of lower-layer cluster correspond to the first relative position information described above. The distance information of same-layer cluster and the direction information of same-layer cluster correspond to the second relative position information described above.

FIG. 13 illustrates an example of a configuration of the lowest-layer index information 222 used in the approximate nearest neighbor search system 1. The lowest-layer index information 222 includes a plurality of entries that correspond to a plurality of lowest-layer clusters, respectively. Each entry includes, for example, fields for cluster ID, reference position, auxiliary reference position, vector ID, distance information between a reference position and a vector, direction information from a reference position to a vector, distance information between vectors, direction information between vectors, distance information between an auxiliary reference position and a vector, and direction information from an auxiliary reference position to a vector.

In an entry corresponding to a lowest-layer cluster, the cluster ID field indicates identification information (cluster ID) assigned to the lowest-layer cluster.

The reference position field indicates a reference position (absolute position information) of the corresponding lowest-layer cluster. As the reference position, for example, any D-dimensional vector belonging to the lowest-layer cluster may be used.

The auxiliary reference position field indicates one or more auxiliary reference positions set in the corresponding lowest-layer cluster. For example, any D-dimensional vector belonging to the lowest-layer cluster may be used as each of the one or more auxiliary reference positions. In the auxiliary reference position field, for example, the one or more auxiliary reference positions are enumerated.

The vector ID field indicates N pieces of identification information (N vector IDs) respectively assigned to N D-dimensional vectors (N belonging vectors) that belong to the corresponding lowest-layer cluster. The vector ID is information by which the corresponding vector is uniquely identifiable. In the vector ID field, for example, the N vector IDs are enumerated.

The field for distance information between a reference position and a vector indicates a distance (distance information) between the corresponding lowest-layer cluster and each of the N belonging vectors. Specifically, the field for distance information between a reference position and a vector indicates a distance between the reference position (reference vector) of the lowest-layer cluster and each of the N belonging vectors. In the field for distance information between a reference position and a vector, for example, N distances respectively corresponding to the N belonging vectors are enumerated.

The field for direction information from a reference position to a vector indicates direction information representing a direction from the corresponding lowest-layer cluster to each of the N belonging vectors. Specifically, the field for direction information from a reference position to a vector indicates direction information representing a direction from the reference position (reference vector) of the lowest-layer cluster to each of the N belonging vectors. In the field for direction information from a reference position to a vector, for example, N pieces of direction information respectively corresponding to the N belonging vectors are enumerated.

The field for distance information between vectors indicates pairwise distances (pieces of distance information) between the vectors belonging to the corresponding lowest-layer cluster. Specifically, the field for distance information between vectors indicates, for example, a distance between each of the N belonging vectors and each of other (N-1) belonging vectors. In the field for distance information between vectors, for example, N × (N-1) distances between vectors are enumerated.

The field for direction information between vectors indicates pieces of direction information respectively representing pairwise directions between the vectors belonging to the corresponding lowest-layer cluster. Specifically, the field for direction information between vectors indicates direction information representing a direction from each of the N belonging vectors to each of other (N-1) belonging vectors, for example. In the field for direction information between vectors, for example, N × (N-1) pieces of direction information between vectors are enumerated.

The field for distance information between an auxiliary reference position and a vector indicates the distance (distance information) between each of the one or more auxiliary reference positions of the corresponding lowest-layer cluster and each of the N belonging vectors. In the field for distance information between an auxiliary reference position and a vector, for example, distances respectively corresponding to combinations of each of the one or more auxiliary reference positions and each of the N belonging vectors are enumerated.

The field for direction information from an auxiliary reference position to a vector indicates direction information representing a direction from each of the one or more auxiliary reference positions of the corresponding lowest-layer cluster to each of the N belonging vectors. In the field for direction information from an auxiliary reference position to a vector, for example, pieces of direction information corresponding to combinations of each of the one or more auxiliary reference positions and each of the N belonging vectors are enumerated.

In the example illustrated in FIG. 13, for example, in an entry corresponding to a lowest-layer cluster to which a cluster ID "0000" is assigned, a reference position "B0000", auxiliary reference positions "B0000-1, B0000-2, ...", vector IDs "va00, vb00, vc00, ...", pieces of distance information "D-a00, D-b00, ..." between the reference position and the vectors, pieces of direction information "A-a00, A-b00, ..." from the reference position to the vectors, pieces of distance information "d-ab00, d-ac00, ..., d-ba00, d-bc00, ..." between the vectors, pieces of direction information "a-ab00, a-ac00, ..., a-ba00, a-bc00, ..." between the vectors, pieces of distance information "D-a100, D-b100,......, D-a200, D-b200, ..." between the auxiliary reference positions and the vectors, and pieces of direction information "A-a100, A-b100, ..., A-a200, A-b200, ..." from the auxiliary reference positions to the vectors are set.

With the above configuration, the search unit 113 can perform the approximate nearest neighbor vector search by using the lowest-layer index information 222. Note that, in the lowest-layer index information 222, each entry may include only the direction information from each of the auxiliary reference positions to each of the vectors, and does not have to include the distance information between each of the auxiliary reference positions and each of the vectors. In addition, each entry may include neither the direction information between the vectors nor the distance information between the vectors, or may include either the direction information between the vectors or the distance information between the vectors. Alternatively, some entries may include at least one of the direction information between the vectors and the distance information between the vectors.

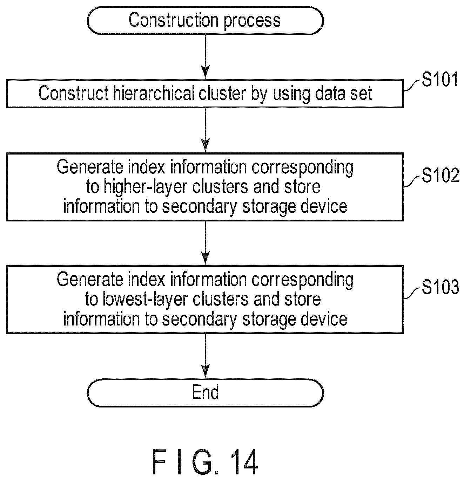

Processes executed in the approximate nearest neighbor search system 1 will be explained with reference to FIGS. 14 to 19.

### Construction Process

FIG. 14 is a flowchart illustrating an example of a procedure of a construction process executed by the processor 11. The construction process is a process of constructing a hybrid index structure 22 that includes the hierarchical cluster HC and an intra-cluster positional relationship by using the data set 21. More specifically, the construction process is a process of generating the hybrid index information 22 by using the data set 21. For example, when the data set 21 has been stored in the secondary storage device 14, the processor 11 executes the construction process.

First, the processor 11 constructs the hierarchical cluster HC by using the data set 21 (step S101). Specifically, the processor 11 determines a lowest-layer cluster to which each of the plurality of vectors included in the data set 21 belongs so that, for example, one or more vectors closer to each other belong to a single lowest-layer cluster. In addition, the processor 11 determines a cluster hierarchical structure such that, for example, one or more clusters whose reference positions are closer to each other belong to a single higher-layer cluster.

The processor 11 generates the higher-layer index information 221 corresponding to the plurality of higher-layer clusters on the basis of the constructed hierarchical cluster HC, and stores the higher-layer index information 221 in the secondary storage device 14 (step S102). Then, the processor 11 generates the lowest-layer index information 222 corresponding to the plurality of lowest-layer clusters on the basis of the constructed hierarchical cluster HC, stores the generated lowest-layer index information 222 in the secondary storage device 14 (step S103), and ends the construction process.

Through the above construction process, the processor 11 can construct the hybrid index structure 22 that includes the hierarchical cluster HC and the intra-cluster positional relationship by using the data set 21. In addition, the processor 11 can generate the higher-layer index information 221 and the lowest-layer index information 222, based on the constructed hybrid index structure 22.

### First Relative Position Information Generation Process

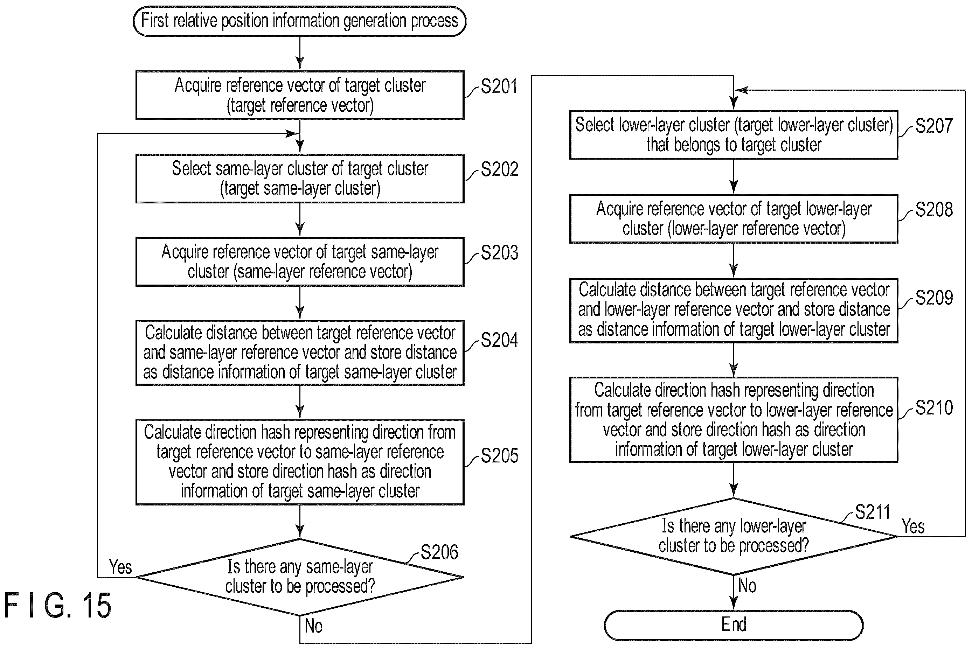

The higher-layer index information 221 includes, for example, (1) relative position information between a reference point of a higher-layer cluster and a reference point of each cluster in the same layer (same-layer cluster) as the higher-layer cluster, and (2) relative position information between the reference point of the higher-layer cluster and a reference point of each lower-layer cluster that belongs to the higher-layer cluster. The relative position information includes, for example, direction information and distance information. Generation of the relative position information in the higher-layer index information 221 will be explained more specifically with reference to FIG. 15.

FIG. 15 is a flowchart illustrating an example of a procedure of a first relative position information generation process executed by the processor 11. The first relative position information generation process is a process of generating the relative position information included in the higher-layer index information 221. Here, a case where the relative position information included in the higher-layer index information 221 corresponding to a higher-layer cluster is generated will be exemplified. In FIG. 15, the higher-layer cluster for which the relative position information is generated is referred to as a target cluster.

First, the processor 11 acquires a reference vector of the target cluster (hereinafter, referred to as a target reference vector) (step S201). The processor 11 selects one same-layer cluster (hereinafter, referred to as a target same-layer cluster) from one or more same-layer clusters in the same layer as the target cluster (step S202). The processor 11 acquires the reference vector of the target same-layer cluster (hereinafter, referred to as a same-layer reference vector) (step S203).

Next, the processor 11 calculates the distance between the target reference vector and the same-layer reference vector, and stores the distance as distance information of the target same-layer cluster with respect to the target cluster (step S204). Specifically, for example, the processor 11 calculates a difference vector obtained by subtracting the target reference vector from the same-layer reference vector. The processor 11 acquires the magnitude of the calculated difference vector as the distance between the target reference vector and the same-layer reference vector. Then, the processor 11 sets, in an entry of the higher-layer index information 221 corresponding to the target cluster, the distance information of the target same-layer cluster indicating the acquired distance.

In addition, the processor 11 calculates direction information representing a direction from the target reference vector to the same-layer reference vector, and stores the calculated direction information as direction information of the target same-layer cluster (step S205). Specifically, for example, the processor 11 acquires R subvectors from the difference vector, which is obtained by subtracting the target reference vector from the same-layer reference vector. The processor 11 calculates a direction hash of R bits by using the R subvectors. Then, the processor 11 sets, in the entry of the higher-layer index information 221 corresponding to the target cluster, the direction information of the target same-layer cluster indicating the calculated direction hash.

Then, the processor 11 determines whether or not there is a same-layer cluster to be processed among the one or more same-layer clusters (step S206).

In a case where there is a same-layer cluster to be processed (Yes in step S206), the processor 11 returns to step S202. That is, a process for generating relative position information of the same-layer cluster to be processed with respect to the target cluster is further executed.

In a case where there is no same-layer cluster to be processed (No in step S206), the processor 11 selects one lower-layer cluster (hereinafter, referred to as a target lower-layer cluster) from one or more lower-layer clusters that belong to the target cluster (step S207). The processor 11 acquires a reference vector of the target lower-layer cluster (hereinafter, referred to as a lower-layer reference vector) (step S208).

Next, the processor 11 calculates the distance between the target reference vector and the lower-layer reference vector, and stores the distance as distance information of the target lower-layer cluster with respect to the target cluster (step S209). Specifically, for example, the processor 11 calculates a difference vector obtained by subtracting the target reference vector from the lower-layer reference vector. The processor 11 acquires the magnitude of the calculated difference vector as the distance between the target reference vector and the lower-layer reference vector. Then, the processor 11 sets, in the entry of the higher-layer index information 221 corresponding to the target cluster, the distance information of the target lower-layer cluster indicating the acquired distance.

In addition, the processor 11 calculates direction information representing a direction from the target reference vector to the lower-layer reference vector, and stores the calculated direction information as direction information of the target lower-layer cluster with respect to the target cluster (step S210). Specifically, for example, the processor 11 acquires R subvectors from the difference vector, which is obtained by subtracting the target reference vector from the lower-layer reference vector. The processor 11 calculates a direction hash of R bits by using the R subvectors. Then, the processor 11 sets, in the entry of the higher-layer index information 221 corresponding to the target cluster, the direction information of the target lower-layer cluster indicating the calculated direction hash.

Then, the processor 11 determines whether or not there is a lower-layer cluster to be processed among the one or more lower-layer clusters (step S211).

In a case where there is a lower-layer cluster to be processed (Yes in step S211), the processor 11 returns to step S207. That is, a process for generating relative position information of the lower-layer cluster to be processed with respect to the target cluster is further executed.

In a case where there is no lower-layer cluster to be processed (No in step S211), the processor 11 ends the first relative position information generation process.

Through the first relative position information generation process explained above, the processor 11 can generate the relative position information included in the higher-layer index information 221. Note that the order of execution of the process from step S202 to step S206 and the process from step S207 to step S211 may be changed, or the process from step S202 to step S206 and the process from step S207 to step S211 may be executed in parallel.

### Second Relative Position Information Generation Process

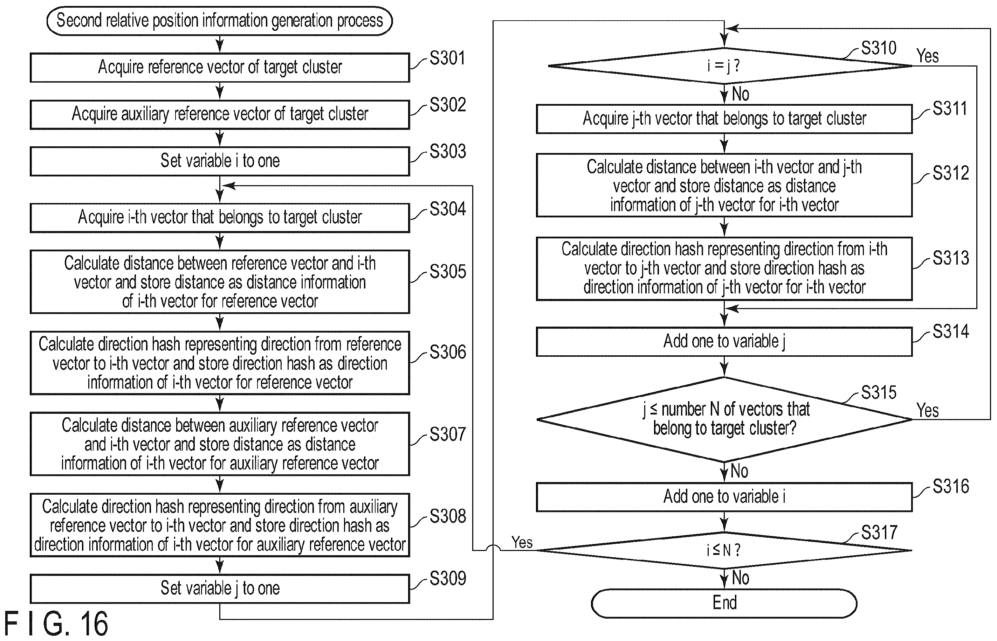

The lowest-layer index information 222 includes, for example, (1) relative position information between a reference point of a lowest-layer cluster and each vector that belongs to the lowest-layer cluster, (2) relative position information between an auxiliary reference point of the lowest-layer cluster and each vector that belongs to the lowest-layer cluster, and (3) relative position information between vectors that belong to the lowest-layer cluster. Generation of the relative position information in the lowest-layer index information 222 will be explained more specifically with reference to FIG. 16.

FIG. 16 is a flowchart illustrating an example of a procedure of a second relative position information generation process executed by the processor 11. The second relative position information generation process is a process of generating relative position information included in the lowest-layer index information 222. Here, a case where the relative position information included in the lowest-layer index information 222 corresponding to a lowest-layer cluster is generated will be exemplified. In FIG. 16, the lowest-layer cluster for which the relative position information is generated is referred to as a target cluster.

First, the processor 11 acquires a reference vector of the target cluster (step S301). The processor 11 acquires an auxiliary reference vector of the target cluster (step S302). The processor 11 may acquire multiple auxiliary reference vectors.

The processor 11 sets a variable i to one (step S303). The variable i is a variable for specifying the i-th vector among N vectors that belong to the target cluster. The processor 11 acquires the i-th vector that belongs to the target cluster (step S304).

The processor 11 calculates the distance between the reference vector and the i-th vector, and stores the distance as distance information of the i-th vector with respect to the reference vector (step S305). Specifically, for example, the processor 11 calculates a difference vector obtained by subtracting the reference vector from the i-th vector. The processor 11 acquires the magnitude of the calculated difference vector as the distance between the i-th vector and the reference vector. Then, the processor 11 sets, in an entry of the lowest-layer index information 222 corresponding to the target cluster, the distance information of the i-th vector with respect to the reference vector indicating the acquired distance.

In addition, the processor 11 calculates a direction hash representing the direction from the reference vector to the i-th vector, and stores the direction hash as direction information of the i-th vector with respect to the reference vector (step S306). Specifically, for example, the processor 11 acquires R subvectors from the difference vector, which is obtained by subtracting the reference vector from the i-th vector. The processor 11 calculates a direction hash of R bits by using the R subvectors. Then, the processor 11 sets, in the entry of the lowest-layer index information 222 corresponding to the target cluster, the direction information of the i-th vector with respect to the reference vector indicating the calculated direction hash.

The processor 11 calculates the distance between the auxiliary reference vector and the i-th vector, and stores the distance as distance information of the i-th vector with respect to the auxiliary reference vector (step S307). A specific method of calculating and storing the distance between the auxiliary reference vector and the i-th vector is a method in which the reference vector in step S305 is replaced with the auxiliary reference vector.

The processor 11 calculates a direction hash representing the direction from the auxiliary reference vector to the i-th vector, and stores the direction hash as direction information of the i-th vector with respect to the auxiliary reference vector (step S308). A specific method of calculating and storing the direction hash from the auxiliary reference vector to the i-th vector is a method in which the reference vector in step S306 is replaced with the auxiliary reference vector.

Note that, in a case where there are multiple auxiliary reference vectors, the process in steps S307 and S308 is performed on each of the auxiliary reference vectors.

Next, the processor 11 sets a variable j to one (step S309). The variable j is a variable for specifying the j-th vector among the N vectors belonging to the target cluster. The processor 11 determines whether or not the variable i is equal to the variable j (step S310).

In a case where the variable i is equal to the variable j (Yes in step S310), the processor 11 proceeds to step S314.

In a case where the variable i is different from the variable j (No in step S310), the processor 11 acquires the j-th vector that belongs to the target cluster (step S311). The processor 11 calculates the distance between the i-th vector and the j-th vector, and stores the distance as distance information of the j-th vector with respect to the i-th vector (step S312). A specific method of calculating and storing the distance between the i-th vector and the j-th vector is a method in which the reference vector and the i-th vector in step S305 are replaced with the i-th vector and the j-th vector, respectively. The processor 11 calculates a direction hash representing the direction from the i-th vector to the j-th vector, stores the direction hash as direction information of the j-th vector with respect to the i-th vector (step S313), and proceeds to step S314. A specific method of calculating and storing the direction from the i-th vector to the j-th vector is a method in which the reference vector and the i-th vector in step S306 are replaced with the i-th vector and the j-th vector, respectively.

Next, the processor 11 adds one to the variable j (step S314). The processor 11 determines whether or not the variable j is equal to or smaller than the number N of vectors that belong to the target cluster (hereinafter, referred to as the number N of vectors) (step S315).

In a case where the variable j is equal to or smaller than the number N of vectors (Yes in step S315), the processor 11 returns to step S310. That is, the processor 11 further executes a process of acquiring relative position information (that is, distance information and direction information) of the new j-th vector with respect to the i-th vector.

In a case where the variable j has exceeded the number N of vectors (No in step S315), the processor 11 adds one to the variable i (step S316). The processor 11 determines whether or not the variable i is equal to or smaller than the number N of vectors (step S317).

In a case where the variable i is equal to or smaller than the number N of vectors (Yes in step S317), the processor 11 returns to step S304. That is, the processor 11 further executes a process of acquiring relative position information for the new i-th vector with respect to each of the reference vector, the auxiliary reference vector, and the j-th vector.

In a case where the variable i has exceeded the number N of vectors (No in step S317), the processor 11 ends the second relative position information generation process.

Through the second relative position information generation process explained above, the processor 11 can generate the relative position information included in the lowest-layer index information 222.

### Approximate Nearest Neighbor Cluster Search Process

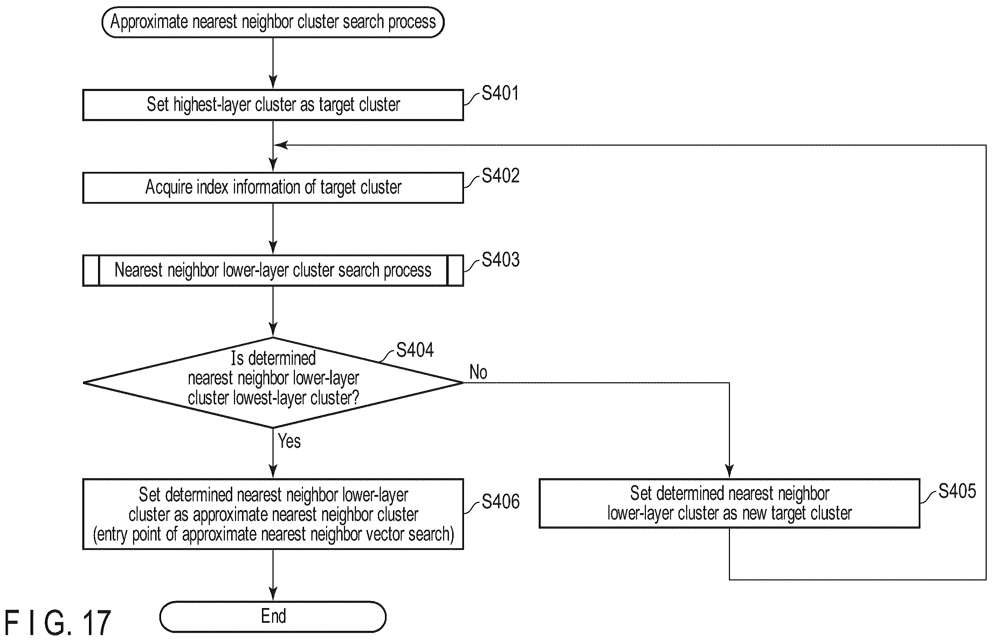

FIG. 17 is a flowchart illustrating an example of a procedure of the approximate nearest neighbor cluster search process executed by the processor 11. The approximate nearest neighbor cluster search process is a process of determining an approximate nearest neighbor cluster to be an entry point of the approximate nearest neighbor vector search process. For example, the processor 11 executes the approximate nearest neighbor cluster search process in response to receiving a query vector (query) based on a query from the external device 2. Here, a case where the search target to determine the approximate nearest neighbor cluster is the hierarchical cluster HC will be exemplified.

First, the processor 11 sets the highest-layer cluster of the hierarchical cluster HC as a target cluster (step S401). The processor 11 acquires the higher-layer index information 221 of the target cluster (step S402). The higher-layer index information 221 of the target cluster is read from the secondary storage device 14 to the main memory 12, for example.

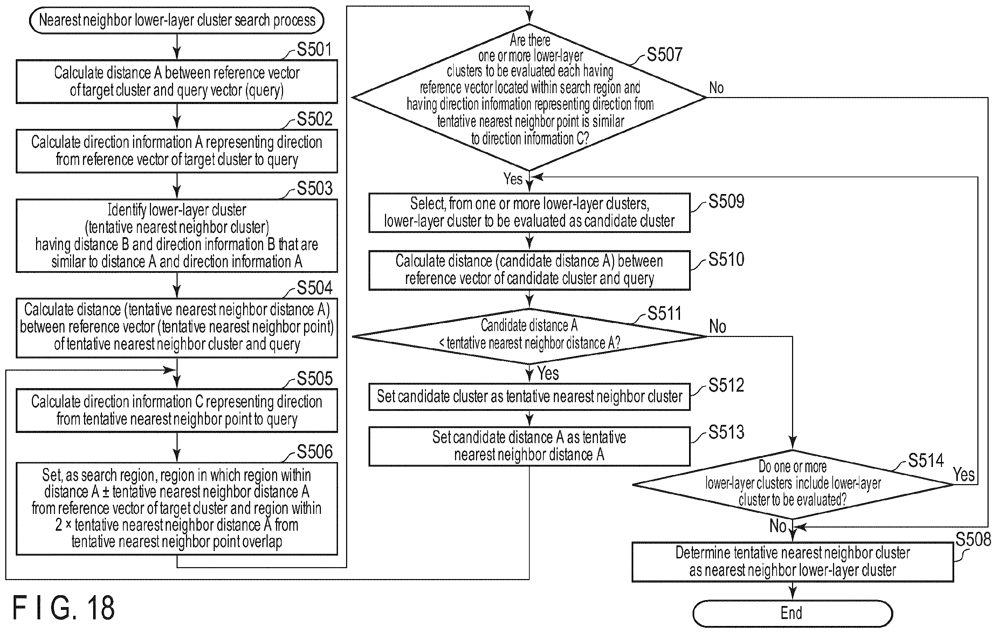

The processor 11 executes a nearest neighbor lower-layer cluster search process by using the acquired higher-layer index information 221 (step S403). The nearest neighbor lower-layer cluster search process is a process of determining a lower-layer cluster closest to the query (hereinafter, referred to as a nearest neighbor lower-layer cluster) among one or more lower-layer clusters that belong to the target cluster. An example of a specific procedure of the nearest neighbor lower-layer cluster search process will be explained below with reference to the flowchart of FIG. 18.

Next, the processor 11 determines whether or not the determined nearest neighbor lower-layer cluster is a lowest-layer cluster (step S404).

In a case where the determined nearest neighbor lower-layer cluster is not a lowest-layer cluster (No in step S404), the processor 11 sets the nearest neighbor lower-layer cluster as a new target cluster (step S405), and returns to step S402. That is, a process of determining a nearest neighbor lower-layer cluster from one or more lower-layer clusters that belong to the new target cluster is further executed.

In a case where the determined nearest neighbor lower-layer cluster is a lowest-layer cluster (Yes in step S404), the processor 11 sets the nearest neighbor lower-layer cluster as the approximate nearest neighbor cluster (step S406), and ends the approximate nearest neighbor cluster search process.

Through the above approximate nearest neighbor cluster search process, the processor 11 can determine the approximate nearest neighbor cluster of the query, in the hierarchical cluster HC. The approximate nearest neighbor cluster is used as an entry point of the approximate nearest neighbor vector search process.

### Nearest Neighbor Lower-Layer Cluster Search Process

FIG. 18 is a flowchart illustrating an example of a procedure of the nearest neighbor lower-layer cluster search process executed by the processor 11. The nearest neighbor lower-layer cluster search process is a process of determining a lower-layer cluster (nearest neighbor lower-layer cluster) closest to the query among one or more lower-layer clusters that belong to the target cluster. The nearest neighbor lower-layer cluster search process corresponds to step S403 described above with reference to FIG. 17.

First, the processor 11 calculates the distance A between the reference vector of the target cluster and the query (step S501). The processor 11 calculates direction information A that represents the direction from the reference vector of the target cluster to the query (step S502).

The processor 11 identifies, as a tentative nearest neighbor cluster, a lower-layer cluster having a combination of a distance B and direction information B that is similar to a combination of the distance A and the direction information A, among one or more lower-layer clusters that belong to the target cluster by using the higher-layer index information 221 of the target cluster (step S503). The higher-layer index information 221 of the target cluster includes relative position information (that is, distance and direction information) of each lower-layer cluster with respect to the reference vector of the target cluster. The processor 11 uses the relative position information of each lower-layer cluster to identify the lower-layer cluster (tentative nearest neighbor cluster) having the combination of the distance B and the direction information B that is similar to the combination of the distance A and the direction information A, from the one or more lower-layer clusters that belong to the target cluster. The fact that the combination of the distance A and the direction information A is similar to the combination of the distance B and the direction information B corresponds to, for example, that the difference between the distance A and the distance B is shorter than a threshold A and the Hamming distance between the direction information A and the direction information B is shorter than a threshold B.

The processor 11 calculates the distance between the reference vector of the tentative nearest neighbor cluster and the query (step S504). The reference vector of the tentative nearest neighbor cluster is also referred to as a tentative nearest neighbor point. The distance between the tentative nearest neighbor point and the query is referred to as a tentative nearest neighbor distance A. The processor 11 calculates direction information C that represents the direction from the tentative nearest neighbor point to the query (step S505).

Next, the processor 11 sets, as a search region of the nearest neighbor cluster, a region in which a region within [the distance A ± the tentative nearest neighbor distance A] from the reference vector of the target cluster and a region within [2 × the tentative nearest neighbor distance A] from the tentative nearest neighbor point overlap each other (step S506). The processor 11 determines whether or not the lower-layer clusters belonging to the target cluster include one or more lower-layer clusters to be evaluated each satisfying a first condition that the reference vector is located within the search region and the direction information representing the direction from the tentative nearest neighbor point is similar to the direction information C (step S507). Note that the fact that two pieces of direction information are similar corresponds to, for example, that the Hamming distance between the two pieces of the direction information is shorter than a threshold C. In addition, each of the one or more clusters to be evaluated is a cluster for which whether or not the distance from the query is shorter than the tentative nearest neighbor distance A has not been evaluated yet.

In a case where the lower-layer clusters belonging to the target cluster include no lower-layer cluster to be evaluated that satisfies the first condition (No in step S507), the processor 11 determines the tentative nearest neighbor cluster as the nearest neighbor lower-layer cluster (step S508), and ends the nearest neighbor lower-layer cluster search process.

In a case where the lower-layer clusters belonging to the target cluster include one or more lower-layer clusters to be evaluated each satisfying the first condition (Yes in step S507), the processor 11 selects a lower-layer cluster to be evaluated from the one or more lower-layer clusters as a candidate cluster (step S509). The processor 11 calculates the distance (hereinafter, referred to as a candidate distance A) between the reference vector of the candidate cluster and the query (step S510). The processor 11 determines whether or not the candidate distance A is shorter than the tentative nearest neighbor distance A (step S511).

In a case where the candidate distance A is shorter than the tentative nearest neighbor distance A (Yes in step S511), the processor 11 sets the candidate cluster as the tentative nearest neighbor cluster (step S512). Then, the processor 11 sets the candidate distance A as the tentative nearest neighbor distance A (step S513), and returns to step S505. That is, a process for searching for the nearest neighbor lower-layer cluster is further executed based on the new tentative nearest neighbor cluster and the new tentative nearest neighbor distance A.

In a case where the candidate distance A is equal to or longer than the tentative nearest neighbor distance A (No in step S511), the processor 11 determines whether or not the one or more lower-layer clusters each satisfying the first condition include a lower-layer cluster to be evaluated (step S514).

In a case where the one or more lower-layer clusters each satisfying the first condition include a lower-layer cluster to be evaluated (Yes in step S514), the processor 11 returns to step S509. That is, a process for searching for the tentative nearest neighbor cluster by using the lower-layer cluster to be evaluated is further executed.

In a case where the one or more lower-layer clusters each satisfying the first condition include no lower-layer cluster to be evaluated (No in step S514), the processor 11 determines the tentative nearest neighbor cluster as the nearest neighbor lower-layer cluster (step S508), and ends the nearest neighbor lower-layer cluster search process.

Through the above nearest neighbor lower-layer cluster search process, the processor 11 can determine the nearest neighbor lower-layer cluster closest to the query from the one or more lower-layer clusters that belong to the target cluster.

### Approximate Nearest Neighbor Vector Search Process

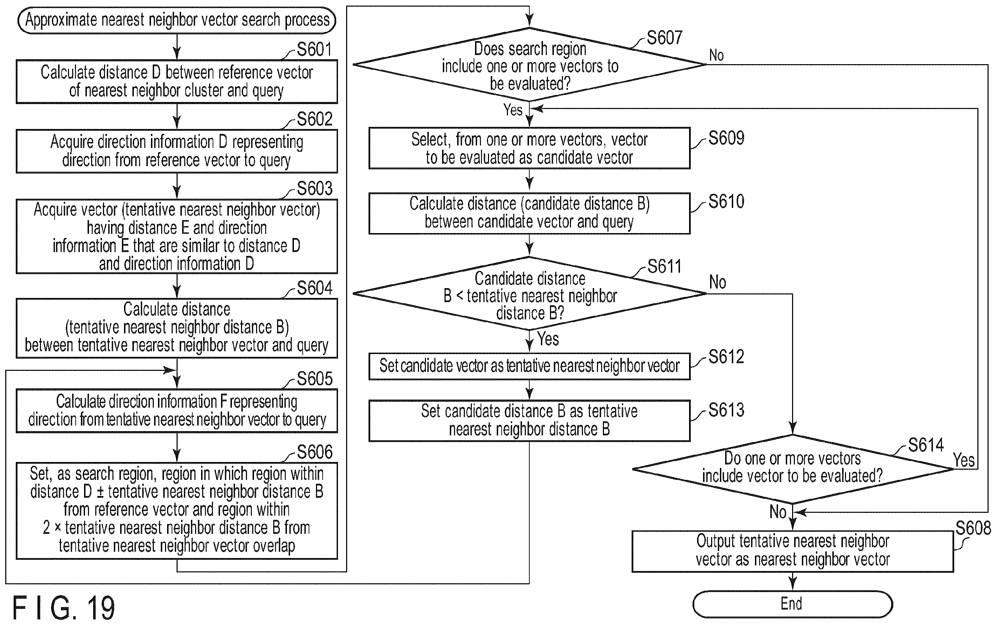

FIG. 19 is a flowchart illustrating an example of a procedure of the approximate nearest neighbor vector search process executed by the processor 11. The approximate nearest neighbor vector search process is a process of determining an approximate nearest neighbor vector of a query. For example, the processor 11 executes the approximate nearest neighbor vector search process in response to the determination of the approximate nearest neighbor cluster. Here, for example, it is assumed that the approximate nearest neighbor cluster has been determined by the approximate nearest neighbor cluster search process described above with reference to FIG. 17. In this case, the processor 11 executes the approximate nearest neighbor vector search process with the approximate nearest neighbor cluster as an entry point.

First, the processor 11 acquires the distance D between the reference vector of the approximate nearest neighbor cluster and the query (step S601). The processor 11 acquires direction information D that represents the direction from the reference vector to the query (step S602). Note that the values calculated in the nearest neighbor lower-layer cluster search process (that is, the tentative nearest neighbor distance A and the direction information C obtained when the approximate nearest neighbor cluster search process was completed) may be used as the distance D and the direction information D.

The processor 11 acquires, as a tentative nearest neighbor vector, a vector having a combination of a distance E and direction information E that is similar to a combination of the distance D and the direction information D, from N vectors that belong to the approximate nearest neighbor cluster (step S603). The processor 11 calculates the distance between the tentative nearest neighbor vector and the query as a tentative nearest neighbor distance B (step S604). The processor 11 calculates direction information F that represents the direction from the tentative nearest neighbor vector to the query (step S605).

Next, the processor 11 sets, as a search region of the nearest neighbor vector, a region in which a region within [the distance D ± the tentative nearest neighbor distance B] from the reference vector and a region within [2 × the tentative nearest neighbor distance B] from the tentative nearest neighbor vector overlap each other (step S606). The processor 11 determines whether or not the vectors belonging to the approximate nearest neighbor cluster include one or more vectors to be evaluated that are located within the search region (step S607). Each of the one or more vectors to be evaluated is a vector for which whether or not the distance from the query is shorter than the tentative nearest neighbor distance B has not been evaluated yet.

In a case where the vectors belonging to the approximate nearest neighbor cluster include no vector to be evaluated that is located within the search region (No in step S607), the processor 11 outputs the tentative nearest neighbor vector as the approximate nearest neighbor vector (step S608), and ends the approximate nearest neighbor vector search process.

In a case where the vectors belonging to the approximate nearest neighbor cluster include one or more vectors to be evaluated that is located within the search region (Yes in step S607), the processor 11 selects, as a candidate vector, a vector to be evaluated from the one or more vectors (step S609). Specifically, the processor 11 obtains the direction information from the reference vector to each of the one or more vectors, which is calculated in advance, for example. By using the acquired direction information, the processor 11 preferentially selects, for example, a vector that has a small directional deviation (for example, a small Hamming distance) from the direction information D and has a large directional deviation from the direction information from the reference vector to the searched (evaluated) vector, as the candidate vector. The processor 11 calculates the distance (hereinafter, referred to as a candidate distance B) between the candidate vector and the query (step S610). The processor 11 determines whether or not the candidate distance B is shorter than the tentative nearest neighbor distance B (step S611).

In a case where the candidate distance B is shorter than the tentative nearest neighbor distance B (Yes in step S611), the processor 11 sets the candidate vector as the tentative nearest neighbor vector (step S612). Then, the processor 11 sets the candidate distance B as the tentative nearest neighbor distance B (step S613), and returns to step S605. That is, a process for searching for the approximate nearest neighbor vector is further executed based on the new tentative nearest neighbor vector and the new tentative nearest neighbor distance B.

In a case where the candidate distance B is equal to or longer than the tentative nearest neighbor distance B (No in step S611), the processor 11 determines whether or not the one or more vectors within the search region include a vector to be evaluated (step S614).

In a case where the one or more vectors within the search region include a vector to be evaluated (Yes in step S614), the processor 11 returns to step S609. That is, a process for searching for the tentative nearest neighbor vector by using the vector to be evaluated is further executed.

In a case where the one or more vectors within the search region include no vector to be evaluated (No in step S614), the processor 11 outputs the tentative nearest neighbor vector as the approximate nearest neighbor vector (step S608), and ends the approximate nearest neighbor vector search process.

Through the above approximate nearest neighbor vector search process, the processor 11 can determine the approximate nearest neighbor vector of the query from the N vectors belonging to the target cluster (i.e., approximate nearest neighbor cluster).

As described above, according to the present embodiment, the approximate nearest neighbor search on the vector database can be efficiently performed.

The approximate nearest neighbor search system 1 performs an approximate nearest neighbor search on a vector database (for example, the data set 21) in which N D-dimensional vectors are stored. The cluster-based index generation unit 111 manages N pieces of first direction information (for example, entries of the lowest-layer index information 222) each representing the direction from a first reference vector of D dimensions to each of the N D-dimensional vectors. The N pieces of first direction information are acquired in advance by preliminary calculation or the like. The search unit 113 receives a query vector of D dimensions. The search unit 113 calculates second direction information representing the direction from the first reference vector to the query vector. The search unit 113 searches for an approximate nearest neighbor vector of the query vector from the N D-dimensional vectors by using the N pieces of first direction information and the second direction information.

For example, by using the N pieces of first direction information and the second direction information, the search unit 113 acquires one or more D-dimensional vectors by excluding, from the N D-dimensional vectors, a D-dimensional vector having direction information that is not similar to the second direction information. Then, the search unit 113 searches for the approximate nearest neighbor vector of the query vector from the acquired one or more D-dimensional vectors. In this manner, the search unit 113 can narrow down the D-dimensional vectors to be searched by using the pieces of direction information.

Therefore, in the approximate nearest neighbor search system 1, the approximate nearest neighbor search on the vector database can be made efficient.

Each of the various functions described in the embodiment may be realized by a circuit (e.g., processing circuit). An exemplary processing circuit may be a programmed processor such as a central processing unit (CPU). The processor executes computer programs (instructions) stored in a memory thereby performs the described functions. The processor may be a microprocessor including an electric circuit. An exemplary processing circuit may be a digital signal processor (DSP), an application specific integrated circuit (ASIC), a microcontroller, a controller, or other electric circuit components. The components other than the CPU described according to the embodiment may be realized in a processing circuit.

While certain embodiments have been described, these embodiments have been presented by way of example only, and are not intended to limit the scope of the inventions. Indeed, the novel devices and methods described herein may be embodied in a variety of other forms; furthermore, various omissions, substitutions and changes in the form of the embodiments described herein may be made without departing from the spirit of the inventions. The accompanying claims and their equivalents are intended to cover such forms or modification as would fall within the scope and spirit of the inventions.

The arrangements as described above include clauses below.

### Clause 1

An approximate nearest neighbor search method for a vector database in which N D-dimensional vectors are stored, the approximate nearest neighbor search method comprising:
managing N pieces of first direction information acquired in advance, the N first pieces of direction information each representing a direction from a first reference vector of D dimensions to each of the N D-dimensional vectors;
receiving a query vector of D dimensions;
calculating second direction information representing a direction from the first reference vector to the query vector; and
searching for an approximate nearest neighbor vector of the query vector from the N D-dimensional vectors by using the N pieces of first direction information and the second direction information,
N being an integer of two or more,
D being an integer of two or more.

### Clause 2

The approximate nearest neighbor search method according to clause 1, further comprising:
managing N pieces of first distance information acquired in advance, the N pieces of first distance information each indicating a first distance between the first reference vector and each of the N D-dimensional vectors;
calculating second distance information indicating a second distance between the first reference vector and the query vector; and
searching for the approximate nearest neighbor vector of the query vector from the N D-dimensional vectors by using the N pieces of first direction information, the N pieces of first distance information, the second direction information, and the second distance information.

### Clause 3

The approximate nearest neighbor search method according to clause 2, wherein
the searching for the approximate nearest neighbor vector of the query vector from the N D-dimensional vectors comprises
searching for a first D-dimensional vector from the N D-dimensional vectors, wherein a similarity between a combination of the second direction information and the second distance information and a combination of the first direction information and the first distance information that corresponds to the first D-dimensional vector is equal to or higher than a first threshold.

### Clause 4

The approximate nearest neighbor search method according to clause 3, wherein
the searching for the approximate nearest neighbor vector of the query vector from the N D-dimensional vectors comprises
searching for the first D-dimensional vector from the N D-dimensional vectors, wherein the similarity between the combination of the second direction information and the second distance information and the combination of the first direction information and the first distance information that corresponds to the first D-dimensional vector is equal to or higher than the first threshold, and a distance between the first D-dimensional vector and the query vector is shorter than the second distance.

### Clause 5

The approximate nearest neighbor search method according to clause 4, wherein
the searching for the first D-dimensional vector from the N D-dimensional vectors comprises:
   acquiring (N-M) D-dimensional vectors by excluding M D-dimensional vectors from the N D-dimensional vectors, the M D-dimensional vectors each corresponding to the first distance information indicating the first distance that exceeds twice the second distance; and
   searching for the first D-dimensional vector from the (N-M) D-dimensional vectors,
M being an integer of one or more.

### Clause 6

The approximate nearest neighbor search method according to clause 5, wherein
the searching for the approximate nearest neighbor vector of the query vector from the N D-dimensional vectors further comprises:
   calculating third distance information indicating a third distance between the first D-dimensional vector and the query vector;
   determining a first region obtained by excluding, from a region within a first radius from the first reference vector, a region within a second radius from the first reference vector, the first radius corresponding to a distance obtained by adding the third distance to the second distance, the second radius corresponding to a distance obtained by subtracting the third distance from the second distance;
   acquiring (N-M-L-1) D-dimensional vectors by excluding, from the (N-M) D-dimensional vectors, L D-dimensional vectors located outside the first region and the first D-dimensional vector; and
   searching for a second D-dimensional vector from the (N-M-L-1) D-dimensional vectors, wherein a similarity between the combination of the second direction information and the second distance information and a combination of the first direction information and the first distance information that corresponds to the second D-dimensional vector is equal to or higher than the first threshold and a distance between the second D-dimensional vector and the query vector is shorter than the third distance,
L being an integer of one or more.

### Clause 7

The approximate nearest neighbor search method according to any one of clauses 2 to 6, wherein
each of the N pieces of first distance information indicates a Euclidean distance between the first reference vector and each of the N D-dimensional vectors, and
the second distance information indicates a Euclidean distance between the first reference vector and the query vector.

### Clause 8

The approximate nearest neighbor search method according to clause 1, wherein
the searching for the approximate nearest neighbor vector of the query vector from the N D-dimensional vectors comprises searching for a first D-dimensional vector from the N D-dimensional vectors, wherein a similarity between the second direction information and the first direction information that corresponds to the first D-dimensional vector is equal to or higher than a second threshold.

### Clause 9

The approximate nearest neighbor search method according to clause 8, wherein
the managing of the N pieces of first direction information comprises calculating the N pieces of first direction information by compressing information on a direction indicated by a first difference vector that is obtained by subtracting the first reference vector from each of the N D-dimensional vectors, and
the calculating of the second direction information comprises compressing information on a direction indicated by a second difference vector that is obtained by subtracting the first reference vector from the query vector.

### Clause 10

The approximate nearest neighbor search method according to clause 9, wherein
the managing of the N pieces of first direction information comprises, in a case where the first direction information corresponding to the first D-dimensional vector among the N pieces of first direction information is managed:
   acquiring R first subvectors from the first difference vector that is obtained by subtracting the first reference vector from the first D-dimensional vector;
   converting the R first subvectors into R first bit values, respectively; and
   generating the first direction information that corresponds to the first D-dimensional vector and includes the R first bit values,
the calculating of the second direction information comprises:
   acquiring R second subvectors from the second difference vector;
   converting the R second subvectors into R second bit values, respectively; and
   generating the second direction information that includes the R second bit values,
R being an integer of two or more.

### Clause 11

The approximate nearest neighbor search method according to clause 10, further comprising
acquiring N Hamming distances that correspond to the N D-dimensional vectors, respectively, by calculating a Hamming distance between the second direction information and each of the N pieces of first direction information, wherein
the searching for the approximate nearest neighbor vector of the query vector comprises searching for the first D-dimensional vector from the N D-dimensional vectors, the first D-dimensional vector corresponding to a Hamming distance that is equal to or shorter than a third threshold among the N Hamming distances.

### Clause 12

The approximate nearest neighbor search method according to clause 11, wherein
the searching for the first D-dimensional vector from the N D-dimensional vectors comprises:
   acquiring (N-P) D-dimensional vectors by excluding, from the N D-dimensional vectors, P D-dimensional vectors that respectively correspond to Hamming distances each exceeding the third threshold among the N Hamming distances; and
   searching for the first D-dimensional vector from the (N-P) D-dimensional vectors,
P being an integer of one or more.

### Clause 13

The approximate nearest neighbor search method according to clause 10, wherein
each of the R subvectors includes D/R elements, and
the converting of the R subvectors into the R bit values comprises:
   in a case where a number of first elements among the D/R elements is more than a number of second elements among the D/R elements, converting a corresponding subvector into one, the first elements each having a value of zero or larger, the second elements each having a value smaller than zero; and
   in a case where the number of first elements is equal to or fewer than the number of second elements, converting the corresponding subvector into zero.

### Clause 14

The approximate nearest neighbor search method according to clause 10, wherein
each of the R subvectors includes D/R elements, and
the converting of the R subvectors into the R bit values comprises:
   in a case where one element selected from the D/R elements according to a certain rule is zero or larger, converting a corresponding subvector into one; and
   in a case where the one element is smaller than zero, converting the corresponding subvector into zero.

### Clause 15

The approximate nearest neighbor search method according to clause 10, wherein
each of the R subvectors includes D/R elements,
   and
the converting of the R subvectors into the R bit values comprises:
   (1) in a case where a first absolute value of a sum of elements each having a positive value among the D/R elements is larger than a second absolute value of a sum of elements each having a negative value among the D/R elements, converting a corresponding subvector into one, and in a case where the first absolute valueis equal to or smaller than the second absolute value, converting the corresponding subvector into zero; or
   (2) in a case where a first sum of squares of the elements each having the positive value among the D/R elements is larger than a second sum of squares of the elements each having the negative value among the D/R elements, converting the corresponding subvector into one, and in a case where the first sum of squares is equal to or smaller than the second sum of squares, converting the corresponding subvector into zero.

### Clause 16

The approximate nearest neighbor search method according to clause 1, further comprising:
managing N pieces of third direction information acquired in advance, the N pieces of third direction information each representing a direction from a second reference vector of D-dimensions to each of the N D-dimensional vectors; and
calculating fourth direction information representing a direction from the second reference vector to the query vector, wherein
the searching for the approximate nearest neighbor vector of the query vector from the N D-dimensional vectors comprises searching for the approximate nearest neighbor vector of the query vector from the N D-dimensional vectors by using the N pieces of first direction information, the second direction information, the N pieces of third direction information, and the fourth direction information.

### Clause 17

The approximate nearest neighbor search method according to clause 16, further comprising:
acquiring N first Hamming distances that respectively correspond to the N D-dimensional vectors by calculating a Hamming distance between the second direction information and each of the N pieces of first direction information; and
acquiring N second Hamming distances that respectively correspond to the N D-dimensional vectors by calculating a Hamming distance between the fourth direction information and each of the N pieces of third direction information, wherein
the searching for the approximate nearest neighbor vector of the query vector from the N D-dimensional vectors comprises searching for a first D-dimensional vector from the N D-dimensional vectors, a sum of the first Hamming distance and the second Hamming distance that correspond to the first D-dimensional vector being shorter than a fourth threshold.

### Clause 18

The approximate nearest neighbor search method according to clause 1, further comprising:
managing a plurality of clusters that have a plurality of reference vectors, respectively, and include a higher-layer cluster and a plurality of lower-layer clusters, the plurality of lower-layer clusters including a first lower-layer cluster that has the first reference vector;
managing a plurality of pieces of fifth direction information acquired in advance, the plurality of pieces of fifth direction information each representing a direction from a higher-layer reference vector of the higher-layer cluster to a lower-layer reference vector of each of the plurality of lower-layer clusters;
calculating sixth direction information representing a direction from the higher-layer reference vector to the query vector; and
identifying the lower-layer reference vector closest to the query vector from the lower-layer reference vector of each of the plurality of lower-layer clusters by using the plurality of pieces of fifth direction information and the sixth direction information, and searching for, as an approximate nearest neighbor cluster, the lower-layer cluster that has the identified lower-layer reference vector, wherein
the identified lower-layer reference vector is the first reference vector,
the approximate nearest neighbor cluster is the first lower-layer cluster, and
the N D-dimensional vectors belong to the first lower-layer cluster.

### Clause 19

The approximate nearest neighbor search method according to clause 18, further comprising:
managing a plurality of pieces of fourth distance information acquired in advance, the plurality of pieces of fourth distance information each indicating a distance between the higher-layer reference vector and the lower-layer reference vector of each of the plurality of lower-layer clusters;
calculating fifth distance information indicating a distance between the higher-layer reference vector and the query vector; and
identifying the lower-layer reference vector closest to the query vector from the lower-layer reference vector of each of the plurality of lower-layer clusters by using the plurality of pieces of fifth direction information, the plurality of pieces of fourth distance information, the sixth direction information, and the fifth distance information, and searching for, as the approximate nearest neighbor cluster, the lower-layer cluster that has the identified lower-layer reference vector.

### Clause 20

An approximate nearest neighbor search system comprising:
a main memory;
a secondary storage device configured to store a vector database in which N D-dimensional vectors are stored; and
a processor configured to access the main memory and the secondary storage device, wherein
the processor is configured to:
   manage N pieces of first direction information acquired in advance, the N pieces of first direction information each representing a direction from a first reference vector of D dimensions to each of the N D-dimensional vectors;
   receive a query vector of D dimensions for which an approximate nearest neighbor search on the vector database is to be performed;
   calculate second direction information representing a direction from the first reference vector to the query vector; and
   search for an approximate nearest neighbor vector of the query vector from the N D-dimensional vectors by using the N pieces of first direction information and the second direction information,
N being an integer of two or more,
D being an integer of two or more.

## Claims

1. An approximate nearest neighbor search method for a vector database (21) in which N D-dimensional vectors are stored, the approximate nearest neighbor search method comprising:
managing N pieces of first direction information acquired in advance, the N first pieces of direction information each representing a direction from a first reference vector of D dimensions to each of the N D-dimensional vectors;
receiving a query vector of D dimensions;
calculating second direction information representing a direction from the first reference vector to the query vector; and
searching for an approximate nearest neighbor vector of the query vector from the N D-dimensional vectors by using the N pieces of first direction information and the second direction information,
N being an integer of two or more,
D being an integer of two or more.

2. The approximate nearest neighbor search method according to claim 1, further comprising:
managing N pieces of first distance information acquired in advance, the N pieces of first distance information each indicating a first distance between the first reference vector and each of the N D-dimensional vectors;
calculating second distance information indicating a second distance between the first reference vector and the query vector; and
searching for the approximate nearest neighbor vector of the query vector from the N D-dimensional vectors by using the N pieces of first direction information, the N pieces of first distance information, the second direction information, and the second distance information.

3. The approximate nearest neighbor search method according to claim 2, wherein
the searching for the approximate nearest neighbor vector of the query vector from the N D-dimensional vectors comprises
searching for a first D-dimensional vector from the N D-dimensional vectors, wherein a similarity between a combination of the second direction information and the second distance information and a combination of the first direction information and the first distance information that corresponds to the first D-dimensional vector is equal to or higher than a first threshold.

4. The approximate nearest neighbor search method according to claim 3, wherein
the searching for the approximate nearest neighbor vector of the query vector from the N D-dimensional vectors comprises
searching for the first D-dimensional vector from the N D-dimensional vectors, wherein the similarity between the combination of the second direction information and the second distance information and the combination of the first direction information and the first distance information that corresponds to the first D-dimensional vector is equal to or higher than the first threshold, and a distance between the first D-dimensional vector and the query vector is shorter than the second distance.

5. The approximate nearest neighbor search method according to claim 4, wherein
the searching for the first D-dimensional vector from the N D-dimensional vectors comprises:
acquiring (N-M) D-dimensional vectors by excluding M D-dimensional vectors from the N D-dimensional vectors, the M D-dimensional vectors each corresponding to the first distance information indicating the first distance that exceeds twice the second distance; and
searching for the first D-dimensional vector from the (N-M) D-dimensional vectors,
M being an integer of one or more.

6. The approximate nearest neighbor search method according to claim 5, wherein
the searching for the approximate nearest neighbor vector of the query vector from the N D-dimensional vectors further comprises:
calculating third distance information indicating a third distance between the first D-dimensional vector and the query vector;
determining a first region (707) obtained by excluding, from a region (705) within a first radius from the first reference vector, a region (706) within a second radius from the first reference vector, the first radius corresponding to a distance obtained by adding the third distance to the second distance, the second radius corresponding to a distance obtained by subtracting the third distance from the second distance;
acquiring (N-M-L-1) D-dimensional vectors by excluding, from the (N-M) D-dimensional vectors, L D-dimensional vectors located outside the first region (707) and the first D-dimensional vector; and
searching for a second D-dimensional vector from the (N-M-L-1) D-dimensional vectors, wherein a similarity between the combination of the second direction information and the second distance information and a combination of the first direction information and the first distance information that corresponds to the second D-dimensional vector is equal to or higher than the first threshold and a distance between the second D-dimensional vector and the query vector is shorter than the third distance,
L being an integer of one or more.

7. The approximate nearest neighbor search method according to any one of claims 2 to 6, wherein
each of the N pieces of first distance information indicates a Euclidean distance between the first reference vector and each of the N D-dimensional vectors, and
the second distance information indicates a Euclidean distance between the first reference vector and the query vector.

8. The approximate nearest neighbor search method according to claim 1, wherein
the searching for the approximate nearest neighbor vector of the query vector from the N D-dimensional vectors comprises searching for a first D-dimensional vector from the N D-dimensional vectors, wherein a similarity between the second direction information and the first direction information that corresponds to the first D-dimensional vector is equal to or higher than a second threshold.

9. The approximate nearest neighbor search method according to claim 8, wherein
the managing of the N pieces of first direction information comprises calculating the N pieces of first direction information by compressing information on a direction indicated by a first difference vector that is obtained by subtracting the first reference vector from each of the N D-dimensional vectors, and
the calculating of the second direction information comprises compressing information on a direction indicated by a second difference vector that is obtained by subtracting the first reference vector from the query vector.

10. The approximate nearest neighbor search method according to claim 9, wherein
the managing of the N pieces of first direction information comprises, in a case where the first direction information corresponding to the first D-dimensional vector among the N pieces of first direction information is managed:
acquiring R first subvectors from the first difference vector that is obtained by subtracting the first reference vector from the first D-dimensional vector;
converting the R first subvectors into R first bit values, respectively; and
generating the first direction information that corresponds to the first D-dimensional vector and includes the R first bit values,
the calculating of the second direction information comprises:
acquiring R second subvectors from the second difference vector;
converting the R second subvectors into R second bit values, respectively; and
generating the second direction information that includes the R second bit values,
R being an integer of two or more.

11. The approximate nearest neighbor search method according to claim 10, further comprising
acquiring N Hamming distances that correspond to the N D-dimensional vectors, respectively, by calculating a Hamming distance between the second direction information and each of the N pieces of first direction information, wherein
the searching for the approximate nearest neighbor vector of the query vector comprises searching for the first D-dimensional vector from the N D-dimensional vectors, the first D-dimensional vector corresponding to a Hamming distance that is equal to or shorter than a third threshold among the N Hamming distances.

12. The approximate nearest neighbor search method according to claim 11, wherein
the searching for the first D-dimensional vector from the N D-dimensional vectors comprises:
acquiring (N-P) D-dimensional vectors by excluding, from the N D-dimensional vectors, P D-dimensional vectors that respectively correspond to Hamming distances each exceeding the third threshold among the N Hamming distances; and
searching for the first D-dimensional vector from the (N-P) D-dimensional vectors,
P being an integer of one or more.

13. The approximate nearest neighbor search method according to claim 10, wherein
each of the R subvectors includes D/R elements,
and
the converting of the R subvectors into the R bit values comprises:
in a case where a number of first elements among the D/R elements is more than a number of second elements among the D/R elements, converting a corresponding subvector into one, the first elements each having a value of zero or larger, the second elements each having a value smaller than zero; and
in a case where the number of first elements is equal to or fewer than the number of second elements, converting the corresponding subvector into zero.

14. The approximate nearest neighbor search method according to claim 10, wherein
each of the R subvectors includes D/R elements,
and
the converting of the R subvectors into the R bit values comprises:
in a case where one element selected from the D/R elements according to a certain rule is zero or larger, converting a corresponding subvector into one; and
in a case where the one element is smaller than zero, converting the corresponding subvector into zero.

15. The approximate nearest neighbor search method according to claim 10, wherein
each of the R subvectors includes D/R elements,
and
the converting of the R subvectors into the R bit values comprises:
(1) in a case where a first absolute value of a sum of elements each having a positive value among the D/R elements is larger than a second absolute value of a sum of elements each having a negative value among the D/R elements, converting a corresponding subvector into one, and in a case where the first absolute value is equal to or smaller than the second absolute value, converting the corresponding subvector into zero; or
(2) in a case where a first sum of squares of the elements each having the positive value among the D/R elements is larger than a second sum of squares of the elements each having the negative value among the D/R elements, converting the corresponding subvector into one, and in a case where the first sum of squares is equal to or smaller than the second sum of squares, converting the corresponding subvector into zero.

16. The approximate nearest neighbor search method according to claim 1, further comprising:
managing N pieces of third direction information acquired in advance, the N pieces of third direction information each representing a direction from a second reference vector of D-dimensions to each of the N D-dimensional vectors; and
calculating fourth direction information representing a direction from the second reference vector to the query vector, wherein
the searching for the approximate nearest neighbor vector of the query vector from the N D-dimensional vectors comprises searching for the approximate nearest neighbor vector of the query vector from the N D-dimensional vectors by using the N pieces of first direction information, the second direction information, the N pieces of third direction information, and the fourth direction information.

17. The approximate nearest neighbor search method according to claim 16, further comprising:
acquiring N first Hamming distances that respectively correspond to the N D-dimensional vectors by calculating a Hamming distance between the second direction information and each of the N pieces of first direction information; and
acquiring N second Hamming distances that respectively correspond to the N D-dimensional vectors by calculating a Hamming distance between the fourth direction information and each of the N pieces of third direction information, wherein
the searching for the approximate nearest neighbor vector of the query vector from the N D-dimensional vectors comprises searching for a first D-dimensional vector from the N D-dimensional vectors, a sum of the first Hamming distance and the second Hamming distance that correspond to the first D-dimensional vector being shorter than a fourth threshold.

18. The approximate nearest neighbor search method according to claim 1, further comprising:
managing a plurality of clusters that have a plurality of reference vectors, respectively, and include a higher-layer cluster and a plurality of lower-layer clusters, the plurality of lower-layer clusters including a first lower-layer cluster that has the first reference vector;
managing a plurality of pieces of fifth direction information acquired in advance, the plurality of pieces of fifth direction information each representing a direction from a higher-layer reference vector of the higher-layer cluster to a lower-layer reference vector of each of the plurality of lower-layer clusters;
calculating sixth direction information representing a direction from the higher-layer reference vector to the query vector; and
identifying the lower-layer reference vector closest to the query vector from the lower-layer reference vector of each of the plurality of lower-layer clusters by using the plurality of pieces of fifth direction information and the sixth direction information, and searching for, as an approximate nearest neighbor cluster, the lower-layer cluster that has the identified lower-layer reference vector, wherein
the identified lower-layer reference vector is the first reference vector,
the approximate nearest neighbor cluster is the first lower-layer cluster, and
the N D-dimensional vectors belong to the first lower-layer cluster.

19. The approximate nearest neighbor search method according to claim 18, further comprising:
managing a plurality of pieces of fourth distance information acquired in advance, the plurality of pieces of fourth distance information each indicating a distance between the higher-layer reference vector and the lower-layer reference vector of each of the plurality of lower-layer clusters;
calculating fifth distance information indicating a distance between the higher-layer reference vector and the query vector; and
identifying the lower-layer reference vector closest to the query vector from the lower-layer reference vector of each of the plurality of lower-layer clusters by using the plurality of pieces of fifth direction information, the plurality of pieces of fourth distance information, the sixth direction information, and the fifth distance information, and searching for, as the approximate nearest neighbor cluster, the lower-layer cluster that has the identified lower-layer reference vector.

20. An approximate nearest neighbor search system comprising:
a main memory (12);
a secondary storage device (14) configured to store a vector database (21) in which N D-dimensional vectors are stored; and
a processor (11) configured to access the main memory (12) and the secondary storage device (14), wherein
the processor (11) is configured to:
manage N pieces of first direction information acquired in advance, the N pieces of first direction information each representing a direction from a first reference vector of D dimensions to each of the N D-dimensional vectors;
receive a query vector of D dimensions for which an approximate nearest neighbor search on the vector database (21) is to be performed;
calculate second direction information representing a direction from the first reference vector to the query vector; and
search for an approximate nearest neighbor vector of the query vector from the N D-dimensional vectors by using the N pieces of first direction information and the second direction information,
N being an integer of two or more,
D being an integer of two or more.
